# EUROPEAN PATENT SPECIFICATION

(11) **EP 2 937 659 B1**
(45) Date of publication and mention of the grant of the patent: **12.09.2018**
(21) Application number: 15156947.2
(22) Date of filing: 27.02.2015
(51) Int. Cl.: F28D 20/00, F17C 11/00, F28F 27/00

(54) **Heat transport apparatus**
WÄRMETRANSPORTVORRICHTUNG
APPAREIL DE TRANSPORT DE CHALEUR

(30) Priority: 24.03.2014 JP 2014060602
(43) Date of publication of application: 28.10.2015
(73) Proprietor: Kabushiki Kaisha Toyota Chuo Kenkyusho, Nagakute-shi, Aichi 480-1192 (JP)
(72) Inventor: Iwata, Ryuichi, Nagakute-shi, Aichi 480-1192 (JP); Yamauchi, Takafumi, Nagakute-shi, Aichi 480-1192 (JP); Hirota, Yasuki, Nagakute-shi, Aichi 480-1192 (JP); Shimazu, Takashi, Nagakute-shi, Aichi 480-1192 (JP)
(74) Representative: Kramer Barske Schmidtchen Patentanwälte PartG mbB

(56) References cited:
- JP-A- 2012 172 900
- JP-A- 2012 172 901
- US-A1- 2013 175 006
- US-A1- 2013 269 369

## Description

### BACKGROUND

### Technical Field

The present invention relates to a heat transport apparatus.

### Related Art

A hitherto known heat transport apparatus includes two or more reaction vessels housing a heat storage material that stores heat when ammonia is desorbed and dissipates heat when ammonia is fixed, and an ammonia pipe that is connected to the two or more reaction vessels to let ammonia flow between the two or more reaction vessels. The heat transport apparatus transports heat by utilizing a difference in ammonia pressure occurring between the two or more reaction vessels to transport ammonia from one of the reaction vessels to another (see Japanese Patent Application Nos. 2012-172900 and 2012-172901). Document JP 2012-172901 discloses a heat transport apparatus according to the preamble of claim 1.

### SUMMARY

In the heat transport apparatus described in the above JP-A Nos. 2012-172900 and 2012-172901, there is the issue that the reaction rate of ammonia take up/release drops under conditions of a small pressure difference between the equilibrium pressure of the ammonia heat storage material housed in one of the reaction vessels and that of the other reaction vessel. In such circumstances, there is a need to control the temperature of the reaction vessels in order to control the reactant and ammonia gas pressure difference, and in some cases it is not possible to secure the energy to control the temperature of the reaction vessels.

In consideration of the above circumstances, the invention addresses achieving the following object.

Namely, an object of the invention is to provide a heat transport apparatus capable of accelerating the reaction rate of ammonia desorption and fixation in a reaction vessel with a small input of energy.

A heat transport apparatus according to a first aspect includes: a reaction vessel housing heat storage material including a chemical adsorbent that stores heat when ammonia is desorbed, and that dissipates heat when ammonia is fixed via a coordination reaction; an ammonia buffer vessel capable of taking up and releasing ammonia; an ammonia pipe that is connected to the reaction vessel and to the ammonia buffer vessel, and that allows ammonia to flow between the reaction vessel and the ammonia buffer vessel; and a pressure control section that controls ammonia pressure in the reaction vessel at least at one time out of when the reaction vessel is desorbing ammonia, or when the reaction vessel fixing ammonia. A difference in ammonia pressure arising between the reaction vessel and the ammonia buffer vessel is utilized to transport heat by transporting ammonia from one vessel to the other vessel.

In the heat transport apparatus according to the first aspect, heat is transported between the reaction vessel and the ammonia buffer vessel as ammonia vapor is transported at high vapor pressure. This thereby suppresses pressure loss accompanying flow of ammonia vapor in the pipe, and raises the heat transportability as a result.

In the heat transport apparatus according to the first aspect, ammonia pressure in the reaction vessel is controlled by the pressure control section at least at one time out of when the reaction vessel is desorbing ammonia, or when the reaction vessel fixing ammonia. This thereby enables the reaction rate of ammonia desorption and fixation in the reaction vessel to be accelerated using a small input of energy.

In this manner, the heat transport apparatus according to the first aspect can provide a heat transport apparatus capable of promoting the reaction rate of ammonia desorption and fixation in the reaction vessel using a small input of energy.

In a heat transport apparatus according to a second aspect, the pressure control section controls so as to lower the ammonia pressure of the reaction vessel when the reaction vessel is desorbing ammonia. This thereby enables the reaction rate of ammonia desorption in the reaction vessel to be promoted with a small input of energy.

A pressure control section according to a third aspect controls so as to lower the ammonia pressure of the reaction vessel during a predetermined time period when the reaction vessel is desorbing ammonia and when the desorption reaction of the reaction vessel is slow. A pressure control section according to a fourth aspect controls so as to lower the ammonia pressure of the reaction vessel during a predetermined time period from the point in time when the desorption reaction starts in the reaction vessel when the reaction vessel is desorbing ammonia.

In a heat transport apparatus according to a fifth aspect, the pressure control section controls so as to raise the ammonia pressure of the reaction vessel when the reaction vessel is fixing ammonia via a coordination reaction. This thereby enables the reaction rate of ammonia fixation in the reaction vessel to be promoted using a small input of energy.

A pressure control section according to a sixth aspect controls so as to raise the ammonia pressure of the reaction vessel when the reaction vessel is fixing ammonia via a coordination reaction during a predetermined time period when the fixation reaction of the reaction vessel is slow. A pressure control section according to a seventh aspect controls so that the ammonia pressure of the reaction vessel rises when the reaction vessel is fixing ammonia via the coordination reaction during a predetermined time period from the point in time when the coordination reaction starts in the reaction vessel.

An ammonia buffer vessel of an eighth aspect may be a reaction vessel housing a heat storage material that stores heat when ammonia is desorbed and that dissipates heat when ammonia is fixed, or a pressurized gas cylinder capable of taking up and releasing ammonia.

A pressure control section of a ninth aspect may be configured so that input energy required to control the ammonia pressure of the reaction vessel is smaller than the input energy required to raise the pressure or lower the pressure of the ammonia buffer vessel.

A pressure control section according to a tenth aspect may be a reaction vessel housing heat storage material including a physical adsorbent, or a chemical adsorbent, that stores heat when ammonia is desorbed and that dissipates heat when ammonia is fixed. A pressure control section according to an eleventh aspect the invention may be a pressurized gas cylinder capable of taking up and releasing ammonia. A heat transport apparatus according to the invention may further include a temperature adjustment section that performs temperature adjustment of the pressure control section.

A pressure control section according to a twelfth aspect may be a piston capable of taking up and releasing ammonia. The piston may have a piston volume of one or more times the pipe volume of the ammonia pipe.

A chemical heat storage material according to a thirteenth aspect may be a metal halide compound. This thereby enables the heat storage density of the reaction vessel housing the heat storage material including the chemical heat storage material to be raised, enabling the overall heat storage density of the heat transport apparatus to be raised.

In the heat transport apparatus according to a fourteenth aspect, the metal halide compound is at least one chloride selected from the group consisting of an alkali metal chloride, an alkali earth metal chloride, and a transition metal chloride. This thereby enables the heat storage density in the reaction vessel housing the heat storage material including a chemical heat storage material to be further raised, thereby enabling the overall heat storage density in the heat transport apparatus to be raised.

In a heat transport apparatus according to a fifteenth aspect, the physical adsorbent is at least one material selected from the group consisting of an activated carbon, a mesoporous silica, a zeolite, a silica gel, and a clay mineral. This enables a smaller amount of heat to be involved in fixing and desorbing ammonia in the pressure control section that is the reaction vessel housing the heat storage material including the physical adsorbent, enabling the controllability of the pressure control section to be raised.

According to the heat transport apparatus of an aspect of the invention, the reaction rate of ammonia desorption and fixation in the reaction vessel can be accelerated using a small input of energy.

### BRIEF DESCRIPTION OF THE DRAWINGS

Embodiments of the invention will be described in detail based on the following figures, wherein:
Fig. 1 is a diagram schematically illustrating a chemical heat storage system according to a first embodiment of the invention;
Fig. 2 is a diagram schematically illustrating a first heat exchange reaction vessel and a second heat exchange reaction vessel according to the present embodiment of the invention;
Fig. 3 is a diagram schematically illustrating a reaction vessel according to the present embodiment of the invention;
Fig. 4 is a diagram schematically illustrating a reaction vessel according to another embodiment of the invention;
Fig. 5 is a diagram illustrating a flow of a heat dissipation and heat storage cycle control routine of the first embodiment of the invention;
Fig. 6 is a diagram schematically illustrating a chemical heat storage system according to a second embodiment of the invention;
Fig. 7 is a diagram illustrating a flow of a heat dissipation and heat storage cycle control routine of the second embodiment of the invention
Fig. 8 is a graph illustrating change in reaction rate with time;
Fig. 9 is a graph illustrating change in ammonia pressure with time;
Fig. 10 is a diagram schematically illustrating a chemical heat storage system according to a third embodiment of the invention; and
Fig. 11 is a diagram illustrating a flow of a heat dissipation and heat storage cycle control routine according to the third embodiment of the invention.

### DETAILED DESCRIPTION

Explanation follows of an example of an embodiment of the invention in a case in which a heat transport apparatus of the invention is applied to a chemical heat storage system.

### First Embodiment

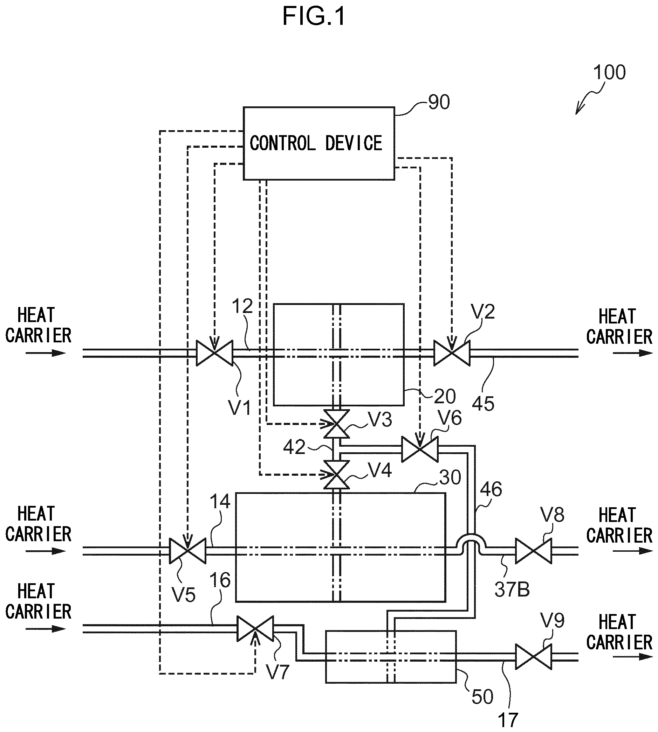

Explanation follows regarding a first embodiment of a chemical heat storage system of the invention, with reference to Fig. 1 to Fig. 5. In the present embodiment, activated carbon is employed as a physical adsorbent in a first heat exchange reaction vessel, magnesium chloride (MgCl₂) is employed as a chemical heat storage material in a second heat exchange reaction vessel, and activated carbon is employed as a physical adsorbent in a pressure control reaction vessel. A detailed explanation follows of an example of a chemical heat storage system that employs a heat carrier that does not undergo a phase change in either of the reaction vessels as the heat carrier supplied to the heat carrier flow path of the first heat exchange reaction vessel, the second heat exchange reaction vessel, and the pressure control reaction vessel.

As illustrated in Fig. 1, a chemical heat storage system 100 of the present embodiment includes a first heat exchange reaction vessel 20 having a physical adsorbent, a second heat exchange reaction vessel 30 having a chemical heat storage material, and a pressure control reaction vessel 50 having a physical adsorbent. The first heat exchange reaction vessel 20 is an example of an ammonia buffer vessel of the invention. The second heat exchange reaction vessel 30 is an example of a reaction vessel of the invention. The pressure control reaction vessel 50 is an example of a pressure control section of the invention.

Flow pipes 12, 45 are connected to the first heat exchange reaction vessel 20, enabling circulation and supply of the heat carrier. Flow pipes 14, 37B are connected to the second heat exchange reaction vessel 30, enabling circulation and supply of the heat carrier. Flow pipes 16, 17 are connected to the pressure control reaction vessel 50, enabling circulation and supply of the heat carrier. More specifically, the flow pipe 12 having valve V1 and the flow pipe 45 having valve V2 are in communication with the first heat exchange reaction vessel 20. The flow pipe 14 having valve V5 and the flow pipe 37B having valve V8 are in communication with the second heat exchange reaction vessel 30. The flow pipe 16 having valve V7 and the flow pipe 17 having valve V9 are in communication with the pressure control reaction vessel 50.

The first heat exchange reaction vessel 20 is connected to the second heat exchange reaction vessel 30 through an ammonia pipe 42 having valves V3, V4. A point of the ammonia pipe 42 between the valves V3, V4 is connected to one end of the flow pipe 46 having a valve V6. The first heat exchange reaction vessel 20 and the second heat exchange reaction vessel 30 are in communication with the pressure control reaction vessel 50 through the ammonia pipe 42 and the flow pipe 46.

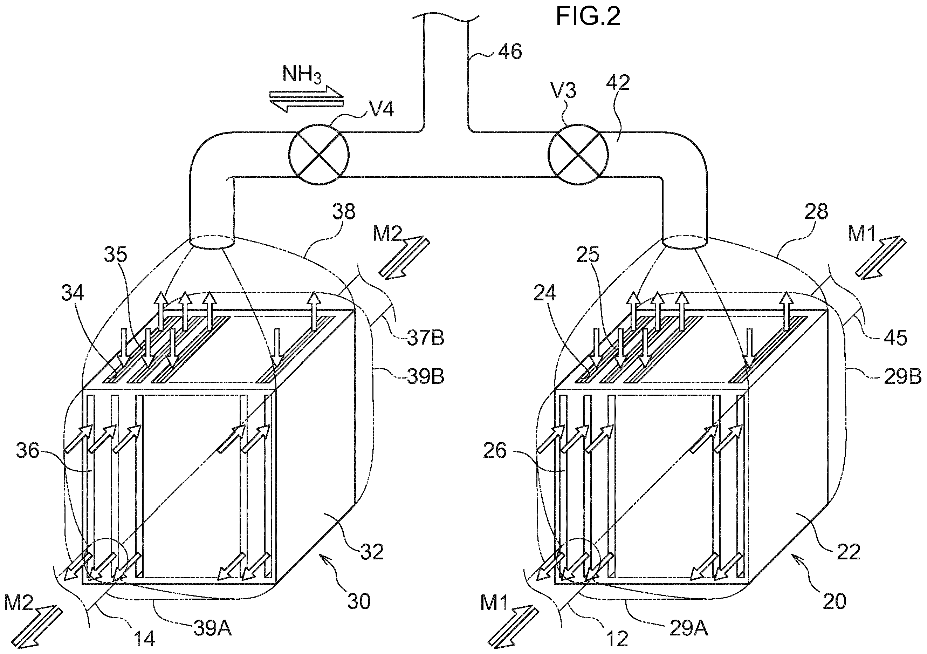

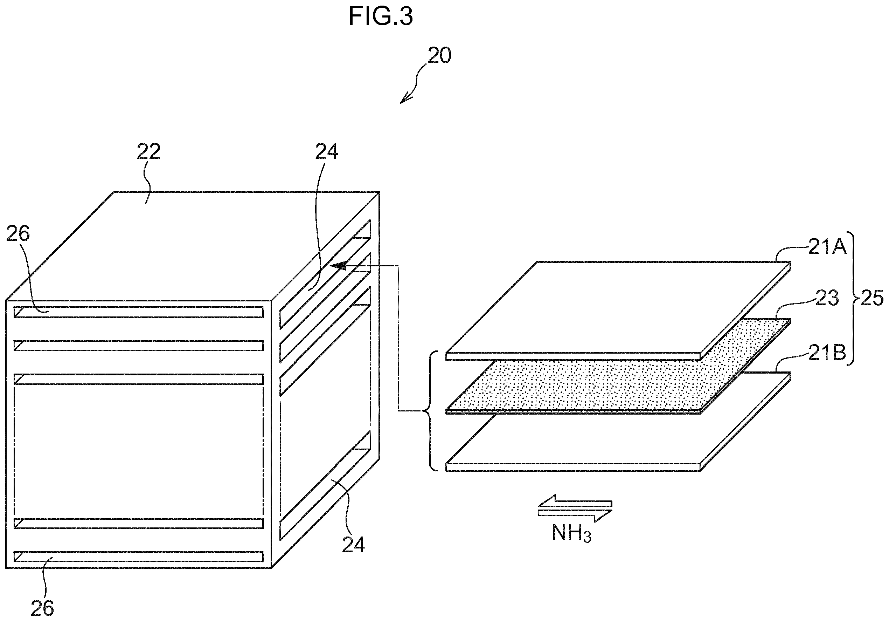

Fig. 2 illustrates a schematic configuration of the first heat exchange reaction vessel 20 and the second heat exchange reaction vessel 30. Fig. 3 is a diagram schematically illustrating the first heat exchange reaction vessel 20 of Fig. 2.

As illustrated in Fig. 3, the first heat exchange reaction vessel 20 is configured including a housing 22, plural heat carrier flow paths 26 provided in the housing 22, plural reaction chambers 24 provided in the housing 22, and layered bodies 25 that contain a heat storage material and are housed in each of the reaction chambers 24.

The reaction chambers 24 and the heat carrier flow paths 26 are alternately disposed in the housing 22, so that two of the heat carrier flow paths 26 are disposed at the outermost sides. The reaction chambers 24 and the heat carrier flow paths 26 are partitioned from each other by partitioning walls. Such a configuration enables heat exchange between an externally supplied heat carrier M1, and a heat storage material molded body in the reaction chambers 24. In the present embodiment, the reaction chambers 24 and the heat carrier flow paths 26 are angular, slot-shaped spaces that each have flattened rectangular open ends. In the present embodiment, the first heat exchange reaction vessel 20 is configured as an orthogonal flow heat exchange reaction vessel in which the opening direction of the reaction chambers 24 (the ammonia flow direction) is orthogonal to the opening direction of the heat carrier flow paths 26 (the heat carrier flow direction) in side view.

As in the example of the first heat exchange reaction vessel 20, the reaction vessel of the invention is preferably configured with two or more reaction chambers housing the heat storage material, with the heat carrier flow paths at least disposed between the reaction chambers. The reaction vessel is preferably configured with two or more reaction chambers, and two or more heat carrier flow paths, with the reaction chambers and the heat carrier flow paths disposed orthogonal to each other.

There are no particular limitations to the number of the reaction chambers 24 or the heat carrier flow paths 26 provided in the first heat exchange reaction vessel 20, and the numbers thereof may be suitably set in consideration of the amount of heat to be input to, and output from, the first heat exchange reaction vessel 20, and the surface area of the heat transfer surface of the heat storage material molded body (the contact surface area with the reaction chamber walls).

The material of the housing 22 is preferably a material having high thermal conductivity and resistance to ammonia corrosion, such as a metal (for example stainless steel, aluminum, aluminum alloy, or the like).

As illustrated in Fig. 3, the layered body 25 is configured including two layers of heat storage material molded body that store heat when ammonia is desorbed, and dissipate heat when ammonia is fixed (a heat storage material molded body 21A, and a heat storage material molded body 21B, also referred to collectively below as "heat storage material molded bodies 21A and 21B"), and a support body 23 sandwiched between the heat storage material molded bodies 21A and 21B. For visibility purposes the configuration of the layered body 25 is illustrated in Fig. 3 with the heat storage material molded body 21A, the support body 23, and the heat storage material molded body 21B separated out.

The configuration of the layered body is preferably such a configuration including at least three layers configuring a heat storage material molded body/support body/heat storage material molded body. The configuration of the layered body may be a configuration other than a three layered configuration, and may be, for example, another configuration in which heat storage material molded bodies and support bodies are alternately disposed, with the heat storage material molded bodies at the outermost layer (for example a five layered configuration such as heat storage material molded body/support body/heat storage material molded body/support body/heat storage material molded body).

The heat storage material molded bodies 21A and 21B each contain a heat storage material that stores heat via an endothermic reaction when ammonia is desorbed, and that dissipates heat via an exothermic reaction when ammonia is fixed.

The heat storage material housed in the reaction vessel in the invention is not limited to a heat storage material molded body (for example the heat storage material molded bodies 21A and 21B) and may employ a powdered heat storage material. However, from the perspective of further raising the efficiency of heat exchange in the reaction vessel, the heat storage material housed in the reaction vessel is preferably a heat storage material molded body.

The heat storage material of the first heat exchange reaction vessel 20 is a physical adsorbent that fixes ammonia via physical adsorption. The heat storage material of the second heat exchange reaction vessel 30 is a chemical heat storage material that fixes ammonia via a coordination reaction. The heat storage material of the first heat exchange reaction vessel 20 may be chemical heat storage material that fixes ammonia via a coordination reaction.

Explanation follows regarding details of a preferable embodiment of a heat storage material in the invention.

A support body capable of allowing ammonia gas flow in a direction along the surface of the support body 23 (for example the directions illustrated by the white arrows in Fig. 3) is preferably employed as the support body 23. This thereby enables a flow path for ammonia gas to be secured between two sheets of heat storage material molded body, enabling ammonia gas (NH₃) supplied from the ammonia pipe 42 to be supplied over a wide area of the heat storage material molded bodies 21A and 21B. Moreover, the ammonia adsorbed to a wide area of the heat storage material molded bodies 21A and 21B can be released toward the ammonia pipe 42 along the support body 23.

More specifically, corrugated plate or a multi-pore plate is preferably employed as the support body 23.

Ammonia can pass through the multi-pore plate interior in cases in which a multi-pore plate is employed as the support body 23.

Ammonia gas passes thorough gaps occurring between the corrugated plate and the heat storage material molded body in cases in which a corrugated plate is employed as the support body 23.

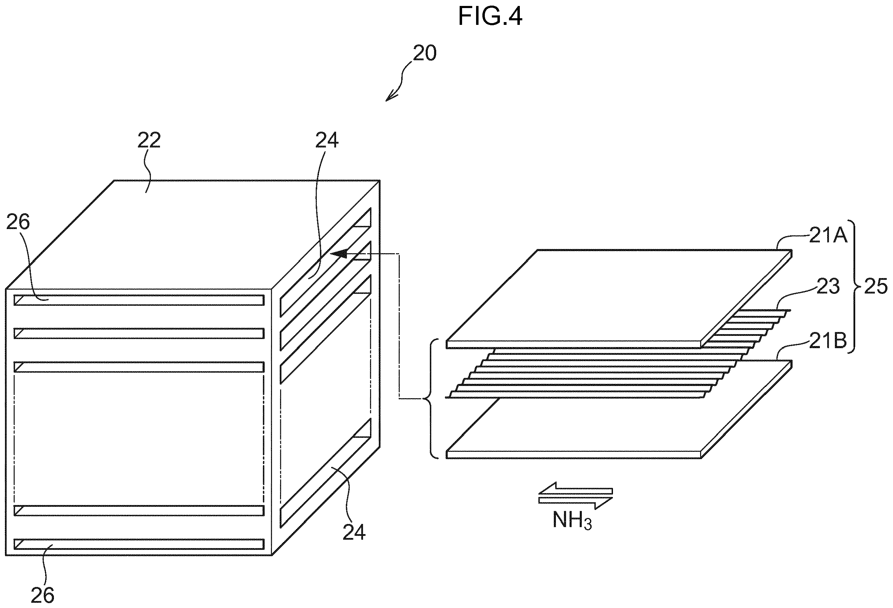

Fig. 4 is a diagram of a particular case in which a corrugated plate is employed as the support body 23, schematically illustrating a first heat exchange reaction vessel 20, and the layered body 25 housed in the first heat exchange reaction vessel 20. Configuration other than the corrugated plate support body 23 is similar to that of Fig. 3.

In cases in which a corrugated plate is employed as the support body 23, ammonia passes between gaps in the layered body 25 arising between the corrugated plate and the heat storage material molded bodies 21A and 21B (in the directions of the white arrows in Fig. 4).

Moreover, as illustrated in Fig. 2, the first heat exchange reaction vessel 20 and the ammonia pipe 42 are connected together through a header member 28 (for example a manifold or the like) that places the plural reaction chambers 24 inside the first heat exchange reaction vessel 20 in airtight communication with the ammonia pipe 42. A configuration is thereby achieved in which ammonia is able to flow in an airtight state between the plural reaction chambers 24 and the ammonia pipe 42.

In order to make the configuration of the first heat exchange reaction vessel 20 and the second heat exchange reaction vessel 30 easily visible, in Fig. 2, the header member 28, a header member 29A, described later, a header member 29B, described later, a header member 38, described later, a header member 39A, described later, a header member 39B, described later, the flow pipe 12, described later, the flow pipe 45, described later, the flow pipe 14, described later, and the heat carrier pipe 37B, described later, are represented by double dot intermittent lines.

As illustrated in Fig. 2, the first heat exchange reaction vessel 20 is connected to the flow pipe 12 though the header member 29A (for example a manifold or the like), and is also connected to the flow pipe 45 through the header member 29B (for example a manifold or the like). The plural heat carrier flow paths 26 within the first heat exchange reaction vessel 20 are placed in communication with the flow pipe 12 in an airtight state through the header member 29A, and placed in communication with the flow pipe 45 in an airtight state through the header member 29B. This thereby enables the heat carrier M1 to flow through the flow pipe 12 and the flow pipe 45, and through the heat carrier flow paths 26 within the first heat exchange reaction vessel 20.

A fluid usually employed as a heat carrier, such as an alcohol such as ethanol or methanol, water, an oil, or a mixture thereof, may be employed as the heat carrier M1. In the present embodiment, an example is explained of a case in which heated water that has been heated with waste heat from a waste heat source is employed as the heat carrier M1.

As illustrated in Fig. 2, the valves V3, V4 are provided on the ammonia pipe 42, such that a difference in ammonia pressure is adjustable by opening or closing the valves V3, V4. The difference in ammonia pressure at the first heat exchange reaction vessel 20 side, and ammonia pressure at the second heat exchange reaction vessel 30 side, can accordingly be more effectively maintained. Namely, a difference in ammonia pressure can be maintained for a long time period by keeping the valves V3, V4 in a closed state, and ammonia can be transported from one heat exchange reaction vessel side to the other heat exchange reaction vessel side by then opening the valves V3, V4. This thereby enables heat stored at one heat exchange reaction vessel side to be efficiently utilized at the other heat exchange reaction vessel side.

As illustrated in Fig. 2, similarly to the first heat exchange reaction vessel 20, the second heat exchange reaction vessel 30 is a heat exchange reaction vessel including a housing 32 provided with plural reaction chambers 34, a layered body 35 housed in each of the reaction chambers 34, and plural heat carrier flow paths 36. The configuration of the layered body 35 and the configuration within the second heat exchange reaction vessel 30 are similar to the configuration of the layered body 25 and the configuration within the first heat exchange reaction vessel 20 respectively.

The second heat exchange reaction vessel 30 is connected to the flow pipe 14 through the header member 39A, and is connected to the heat carrier pipe 37B through the header member 39B. The plural heat carrier flow paths 36 within the second heat exchange reaction vessel 30 are placed in communication with the flow pipe 14 in an airtight state by the header member 39A, and are placed in communication with the heat carrier pipe 37B in an airtight state through the header member 39B. This thereby enables the heat carrier M2 to flow through the flow pipe 14 and the heat carrier pipe 37B, and through the heat carrier flow paths 36 within the second heat exchange reaction vessel 30.

A fluid usually employed as heat carrier, such as an alcohol such as ethanol, water, an oil, or a mixture thereof, may be employed as the heat carrier M2. As an example, explanation follows regarding a case in the present embodiment in which water that has been heated with waste heat from a waste heat source is employed as the heat carrier M2. The flow paths of the heat carrier M1 and the flow paths of the heat carrier M2 are independent of each other.

Similarly to the first heat exchange reaction vessel 20, the pressure control reaction vessel 50 is a reaction vessel including a housing provided with plural reaction chambers, a layered body housed in each of the reaction chambers, and plural heat carrier flow paths. The configuration of the layered body and the configuration within the pressure control reaction vessel 50 are similar to the configuration of the layered body 25 and the configuration within the first heat exchange reaction vessel 20 respectively. The plural reaction chambers within the pressure control reaction vessel 50 are connected to the flow pipe 46 by the header member (for example a manifold or the like), through which communication occurs in an airtight state.

The pressure control reaction vessel 50 is connected to the header member through the flow pipe 16. The plural heat carrier flow paths within the pressure control reaction vessel 50 are placed in communication with the flow pipe 16 in an airtight state by the header member. A configuration is thereby achieved in which the heat carrier can flow into the pressure control reaction vessel 50 through the flow pipe 16. Explanation follows of an example of a case in the present embodiment in which water that has been heated with waste heat from a waste heat source is employed as the heat carrier.

So that the input energy required to control the ammonia pressure in the second heat exchange reaction vessel 30 is less than the input energy required for the first heat exchange reaction vessel 20 to increase the pressure or decrease the pressure of ammonia, the pressure control reaction vessel 50 is configured smaller, and with a lower heat capacity, than the first heat exchange reaction vessel 20.

An ammonia supply means (not illustrated in the drawings) for supplying ammonia into the apparatus, an exhaust means (not illustrated in the drawings) for exhausting from the inside of the apparatus, a pressure measurement means (not illustrated in the drawings) for measuring the ammonia pressure within the apparatus, and the like may be connected to the chemical heat storage system 100.

Explanation next follows regarding an example of heat transport between the first heat exchange reaction vessel 20 and the second heat exchange reaction vessel 30.

### Heat Dissipation Mode

Explanation first follows regarding of an example of heat utilization in which heat supplied to the first heat exchange reaction vessel 20 is transported to the second heat exchange reaction vessel 30, and the transported heat is dissipated externally from the second heat exchange reaction vessel 30. In this example the first heat exchange reaction vessel 20 is employed as the reaction vessel on the heat input side, and the second heat exchange reaction vessel 30 is employed as the reaction vessel on the heat output side.

In this example, as the initial state, first ammonia is collected at the first heat exchange reaction vessel 20 side, and a state achieved in which the ammonia is fixed to the heat storage material in the first heat exchange reaction vessel 20, and the valve V3 is then closed. A more specific example of a method that achieves the initial state is similar to in the method of "regeneration", described below.

The valves V3, V6 are then opened, ammonia is taken up on the pressure control reaction vessel 50 side, a state is achieved in which ammonia is fixed to the heat storage material in the pressure control reaction vessel 50, and then the valves V3, V6 are closed.

The valves V7, V9 are then opened, and heat is supplied by allowing high temperature heat carrier to flow to the pressure control reaction vessel 50. The valves V4, V6 are then opened.

In this state, the ammonia pressure on the pressure control reaction vessel 50 side becomes higher than the ammonia pressure on the second heat exchange reaction vessel 30 side, and the adsorption reaction of the heat storage material of the second heat exchange reaction vessel 30 is accelerated due to the ammonia pressure of the second heat exchange reaction vessel 30 rising. In this manner, the adsorption reaction is accelerated in the time period when the adsorption reaction of the heat storage material of the second heat exchange reaction vessel 30 is slow, namely for a predetermined time period from the point in time when the adsorption reaction of the heat storage material of the second heat exchange reaction vessel 30 starts.

The valve V6 is then closed, and the valve V3 is opened. When this is performed, heat is supplied by opening the valve V1, and allowing the high temperature heat carrier M1 to flow into the first heat exchange reaction vessel 20.

The heat carrier M2 is caused to flow through the second heat exchange reaction vessel 30 to dissipate heat toward an external heat utilization target.

In this state, the ammonia pressure on the first heat exchange reaction vessel 20 side becomes higher than the ammonia pressure on the second heat exchange reaction vessel 30 side, and the ammonia is transported from the first heat exchange reaction vessel 20 having high ammonia pressure toward the second heat exchange reaction vessel 30 having relatively low ammonia pressure. When this occurs, ammonia is desorbed from the heat storage material in the first heat exchange reaction vessel 20 via an endothermic reaction in the first heat exchange reaction vessel 20. The endothermic reaction is maintained by maintaining the flow of high temperature heat carrier M1 into the first heat exchange reaction vessel 20 (namely, by maintaining supply of heat to the first heat exchange reaction vessel 20).

The ammonia that has arrived at the second heat exchange reaction vessel 30 by the above ammonia transport is fixed to the heat storage material within the reaction chambers 34 of the second heat exchange reaction vessel 30 via an exothermic reaction. The heat carrier M2 is heated via the exothermic reaction, and the heated heat carrier M2 dissipates heat toward an external heating target.

In this manner, ammonia is supplied from the pressure control reaction vessel 50 to the second heat exchange reaction vessel 30 for the predetermined time period from the point in time of the start of the ammonia adsorption reaction of the heat storage material of the second heat exchange reaction vessel 30, and the adsorption reaction is accelerated. Then, accompanying transport of the ammonia from the first heat exchange reaction vessel 20 to the second heat exchange reaction vessel 30, the heat supplied to the first heat exchange reaction vessel 20 is transported to the second heat exchange reaction vessel 30 side, and heat is dissipated from the second heat exchange reaction vessel 30.

### Heat Storage Mode

When the above heat dissipation continues, and the ammonia in the first heat exchange reaction vessel 20 has decreased, the initial state is regenerated by collecting the ammonia in the system once more at the first heat exchange reaction vessel 20 side, and fixing the ammonia to the heat storage material molded bodies 21A and 21B in the first heat exchange reaction vessel 20.

As a specific example of regeneration, first, in a state in which the valve V3 is closed, the valve V4, V6 are opened, thereby allowing the heat carrier M2 maintained at high temperature (for example, 160°C) to flow in the heat carrier flow paths 36 of the second heat exchange reaction vessel 30.

The ammonia accordingly desorbs from the second heat exchange reaction vessel 30 via an endothermic reaction, and allowing ammonia supplied from the second heat exchange reaction vessel 30 to be adsorbed by the heat storage material of the pressure control reaction vessel 50 accelerates the desorption reaction of the heat storage material of the second heat exchange reaction vessel 30 due to the ammonia pressure of the second heat exchange reaction vessel 30 falling. In this manner, the desorption reaction is accelerated in the time period when the desorption reaction of the heat storage material of the second heat exchange reaction vessel 30 is slow, namely for a predetermined time period from the point in time when the desorption reaction of the heat storage material of the second heat exchange reaction vessel 30 starts.

The valve V6 is then closed and the valve V3 opened. This thereby allows flow of the heat carrier M2, maintained at a high temperature (for example, 160°C), in the heat carrier flow paths 36 of the second heat exchange reaction vessel 30.

The ammonia is thereby desorbed from the second heat exchange reaction vessel 30 via an endothermic reaction, and the ammonia is transported from the second heat exchange reaction vessel 30 side to the first heat exchange reaction vessel 20 side.

The ammonia that has arrived at the first heat exchange reaction vessel 20 is fixed to the heat storage material molded bodies 21A and 21B in the reaction chambers 24 of the first heat exchange reaction vessel 20 via an exothermic reaction.

The exothermic reaction is maintained by, for example, maintaining a supply of external air to the first heat exchange reaction vessel 20.

Ammonia from the second heat exchange reaction vessel 30 is thereby taken up by the pressure control reaction vessel 50 for the predetermined time period from the point in time when the ammonia desorption reaction of the heat storage material of the second heat exchange reaction vessel 30 starts, and the desorption reaction is accelerated. After this, the second heat exchange reaction vessel 30 stores heat as the ammonia is transported from the second heat exchange reaction vessel 30 to the first heat exchange reaction vessel 20.

In the chemical heat storage system 100, the heat dissipation mode and the heat storage mode can be performed repeatedly.

As explained in the above example of the present embodiment, the chemical heat storage system 100 of the invention is an apparatus that transports heat by transporting ammonia from one reaction vessel to another reaction vessel by utilizing a difference in ammonia pressure arising between the two reaction vessels.

### Heat Storage Material

Explanation next follows regarding a preferable range of heat storage materials housed in the first and second heat exchange reaction vessels.

The heat storage material housed in the second heat exchange reaction vessel preferably contains a chemical heat storage material that fixes ammonia via a coordination reaction.

Employing a heat storage material including such a chemical heat storage material enables the heat storage density of the second heat exchange reaction vessel to be raised, thereby enabling the overall heat storage density of the heat transport apparatus to be raised. Compared to physical adsorbents, chemical heat storage materials exhibit greater variation in heat storage temperature with type. Thus by employing a second heat exchange reaction vessel housing a heat storage material including a chemical heat storage material, a wider selection of operation conditions of the heat transport apparatus, such as operation temperature and operation ammonia pressure, is achievable by selecting the type of chemical heat storage material. This thereby enables a wider range of operation ammonia pressures and operation temperatures to be achieved to match the heat usage target.

However, in the first heat exchange reaction vessel, fixation and desorption of ammonia in the reaction vessel with a small amount of heat is enabled due to employing a heat storage material including a physical adsorbent, further raising controllability of heat transport for the heat transport apparatus overall.

This thereby enables a large heat output to be obtained from a small heat input due to the difference in the heat of reaction between the reaction vessels that depends on the selection of the combination of the heat storage materials for the first heat exchange reaction vessel and the second heat exchange reaction vessel.

In the combined configuration of the first heat exchange reaction vessel containing the physical adsorbent and the second heat exchange reaction vessel containing a chemical adsorbent, a higher heat storage density is obtained for the apparatus overall due to the second heat exchange reaction vessel containing the chemical heat storage material. Moreover, easier control of fixation and desorption of ammonia is enabled due to the first heat exchange reaction vessel containing the physical adsorbent.

Moreover, the above combined configuration employs the chemical heat storage material having the property of a larger amount of heat being involved in fixation and desorption of ammonia than for a physical adsorbent, and the physical adsorbent having the property of a smaller amount of heat being involved in fixation and desorption of ammonia than for a chemical heat storage material. Utilizing the difference between the heat of reaction between the reaction vessels therefore enables a larger heat amount to be dissipated at the side of the second heat exchange reaction vessel containing the chemical heat storage material, even in cases in which heat is supplied in a small amount to the side of the first heat exchange reaction vessel containing the physical adsorbent.

For example, whereas the amount of heat involved in fixation or desorption of 1 mole of ammonia is from 40 kJ/mol to 60 kJ/mol for a chemical heat storage material (for example LiCl, MgCl₂, CaCl₂, SrCl₂, BaCl₂, MnCl₂, CoCl₂, NiCl₂ etc.), the amount of heat involved is from 20 kJ/mol to 30 kJ/mol for a physical adsorbent (for example activated carbon, mesoporous silica, zeolite, silica gel, clay minerals, etc.)

### Chemical Heat Storage Material

More detailed explanation next follows regarding preferable embodiments of the chemical heat storage material.

From the viewpoint of higher heat storage density in a reaction vessel, the chemical heat storage material is preferably a metal halide compound, is more preferably an alkali metal chloride, an alkaline earth metal chloride, or a transition metal chloride, and is particularly preferably LiCl, MgCl₂, CaCl₂, SrCl₂, BaCh, MnCl₂, CoCl₂, or NiCl₂.

The metal halide compound may be a metal halide compound employed singly, or in a combination of two or more thereof.

In cases in which the heat storage material of the invention contains the chemical heat storage material, the chemical heat storage material in the heat storage material may be contained singly, or in a combination of two or more thereof.

In cases in which the heat storage material of the invention contains the chemical heat storage material, components other than the chemical heat storage material may be contained in the heat storage material.

Examples of such other components include binder components such as alumina, or silica, and heat transfer enhancement materials such as carbon fiber.

However, in cases in which the heat storage material of the invention contains the chemical heat storage material, from the viewpoint of further increasing heat storage density, the content of the chemical heat storage material in the heat storage material is preferably 60% by mass or greater, and more preferably 80% by mass or greater.

In cases in which a heat storage material containing a chemical heat storage material is molded into a heat storage material molded body, there are no particular limitations to the molding method. Examples include methods in which a heat storage material (or a slurry containing a heat storage material) containing a chemical heat storage material (and any other components, such as a binder, if necessary) is molded by a known molding means, such as by press molding, extrusion molding.

The pressure for molding is, for example, from 20 MPa to 100 MPa, and preferably from 20 MPa to 40 MPa.

### Physical Adsorbent

More detailed explanation next follows regarding preferable embodiments of the physical adsorbent.

A multi-pore body may be employed as the physical adsorbent.

From the viewpoint of further improving the reactivity of fixation and desorption of ammonia by physical adsorption, a multi-pore body having pores of 10 nm or smaller is preferably employed as the multi-pore body.

The lower limit to the size of the pores is preferably 0.5 nm from viewpoints such as manufacturability.

From similar viewpoints, a multi-pore body that is an aggregate body of primary particles obtained by aggregating primary particles having an average primary particle size of 50 µm or lower is preferable as the multi-pore body.

The lower limit of the average primary particle size is preferably 1 µm from viewpoints such as manufacturability.

Specific examples of the multi-pore body include activated carbon, mesoporous silica, zeolite, silica gel, and clay minerals.

The activated carbon is preferably activated carbon having a specific surface area measured by BET theory of from 800 m²/g to 2500 m²/g (and more preferably from 1800 m²/g to 2500 m²/g).

The clay mineral may be a non-crosslinked clay mineral, or may be a clay mineral that is crosslinked (a crosslinked clay mineral). Sepiolite and the like are examples of clay minerals.

In cases in which the heat storage material in the invention contains a physical adsorbent (preferably the multi-pore body), the heat storage material may contain the physical adsorbent (preferably the multi-pore body) singly, or in a combination of two or more thereof.

In the invention, the type of physical adsorbent (preferably the multi-pore body) may be selected as appropriate to match the operation ammonia pressure and the operation temperature.

From the viewpoint of further raising the reactivity toward fixation and desorption of the ammonia by the physical adsorbent, the physical adsorbent preferably contains at least activated carbon.

In cases in which the heat storage material of the invention contains a physical adsorbent, from the viewpoint of maintaining a higher reactivity toward fixation and desorption of the ammonia, the content of physical adsorbent in the heat storage material is preferably 80% by volume or greater, and more preferably 90% by volume or greater.

In cases in which a heat storage material containing the physical adsorbent is employed in the invention as a molded body (heat storage material molded body), the heat storage material preferably contains a binder in addition to the physical adsorbent. The shape of the heat storage material molded body is more effectively maintained by including a binder in the heat storage material, thereby raising the reactivity of the physical adsorbent toward fixation and desorption of ammonia.

The binder is preferably at least one kind of water-based binder.

Examples of the water-based binder include polyvinyl alcohols, and trimethyl cellulose.

In cases in which the heat storage material of the invention includes a physical adsorbent and a binder, from the viewpoint of more effectively maintaining the shape of the heat storage material molded body, the content of the binder in the heat storage material is preferably 5% by volume or greater, and is more preferably 10% by volume or greater.

In cases in which the heat storage material of the invention includes a physical adsorbent and a binder, components other than the physical adsorbent and the binder may also be included, if necessary.

Examples of such other components include heat transfer enhancement materials such as carbon fiber.

In cases in which a heat storage material containing a physical adsorbent is molded into a heat storage material molded body, there are no particular limitations to the molding method. Examples include methods in which a heat storage material (or a slurry containing a heat storage material) containing a physical heat storage material (and any other components, such as a binder, if necessary) is molded by a known molding means, such as by press molding, or extrusion molding.

The pressure for molding is, for example, from 20 MPa to 100 MPa, and preferably from 20 MPa to 40 MPa.

### Preferable Embodiments of the Reaction Chamber

Explanation next follows regarding preferable embodiments of reaction chamber in the first and second heat exchange reaction vessels (for example the reaction chambers 24 in the first heat exchange reaction vessel 20 and the reaction chambers 34 in the second heat exchange reaction vessel 30), taking the reaction chambers 24 of the first heat exchange reaction vessel 20 as an example.

The internal walls of the reaction chambers 24 in the first heat exchange reaction vessel 20 preferably include a portion in contact with the heat storage material molded bodies 21A and 21B. In the reaction chambers 24 of the first heat exchange reaction vessel 20, a more preferable embodiment is one in which the internal walls of the reaction chambers 24 contact one of the main faces of the heat storage material molded bodies 21A and 21B (namely, an embodiment in which the heat storage material molded body is sandwiched between an internal wall of the reaction chamber and a surface of the support body).

Namely, holding the heat storage material molded bodies 21A and 21B are in a state of contact with an internal wall of the reaction chambers 24 and a surface of the support body 23 respectively is preferable.

Configuring the internal walls of the reaction chambers 24 with the portions contacting the heat storage material molded bodies 21A and 21B enables more effective heat exchange to be performed between the first heat exchange reaction vessel and the heat storage material molded body through the internal walls of the reaction chambers 24. Generally, when a heat storage material molded body is used repeatedly, splitting (including cracks) and pulverization sometimes occurs in the heat storage material molded body due to repeated volumetric expansion and contraction of the heat storage material molded body caused by fixation and desorption of ammonia. However, adopting the configuration described above enables splitting (including cracks) and pulverization during such repeated use to be more effectively suppressed from occurring in the heat storage material molded body.

Preferable embodiments of the reaction chambers 34 of the second heat exchange reaction vessel 30 are similar to those of the reaction chambers 24 of the first heat exchange reaction vessel 20.

A control device 90 is a control section that performs overall control of the chemical heat storage system 100, and is electrically connected to the valves V1 to V9, and to an external heat source, so as to be able to control the valves and heat source, and control the heat utilization by controlling heat exchange.

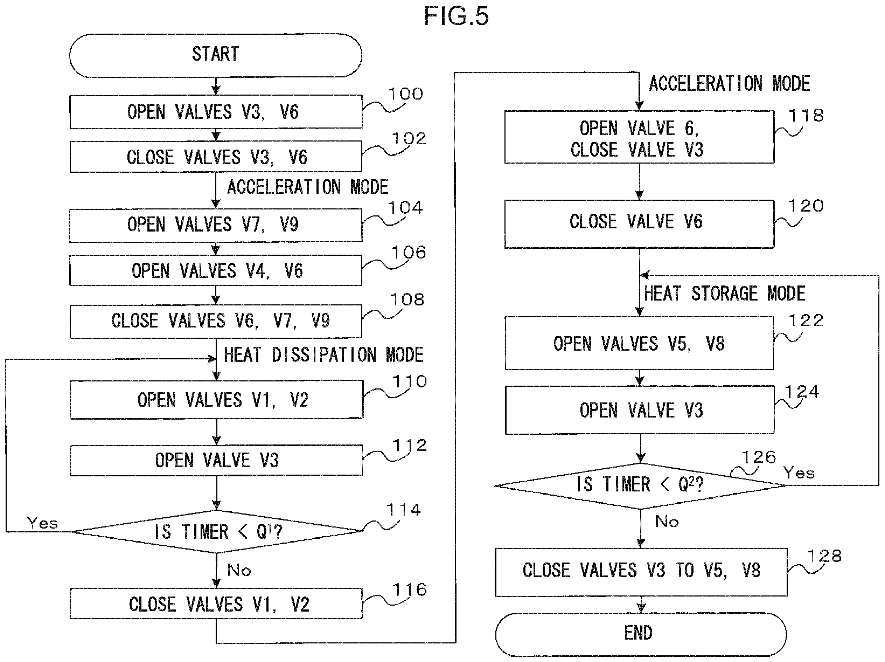

Explanation next follows with reference to Fig. 5, mainly focusing on a heat dissipation and heat storage cycle control routine, in control routines by the control device 90 that is a control section that controls the chemical heat storage system of the present embodiment. In the heat dissipation and heat storage cycle control routine, heat is stored after high temperature water has been supplied to the first heat exchange reaction vessel 20 and heat has been dissipated from the second heat exchange reaction vessel 30.

When the power source of the control device 90 is turned ON by switching ON the startup switch of the chemical heat storage system of the present embodiment, the system starts up, and when heat dissipation from the second heat exchange reaction vessel 30 is requested, the heat dissipation and heat storage cycle control routine is executed and operation of a pump P starts.

On execution of the present routine, first, at step 100, the valve V3 attached to the ammonia pipe 42 and the valve V6 attached to the flow pipe 46 are opened. When this occurs, ammonia is transported from the heat storage material of the first heat exchange reaction vessel 20 to the pressure control reaction vessel 50, and fixed to the heat storage material of the pressure control reaction vessel 50. Then at step 102, the valve V3 attached to the ammonia pipe 42 and the valve V6 attached to the flow pipe 46 are closed.

Then at step 104, the valve V7 attached to the flow pipe 16 and the valve V9 attached to the flow pipe 17 are opened, and heating of the pressure control reaction vessel 50 is started. At step 106, the valve V4 attached to the ammonia pipe 42 and the valve V6 attached to the flow pipe 46 are opened. When this occurs, ammonia is transported from the heat storage material of the pressure control reaction vessel 50 to the heat storage material of the second heat exchange reaction vessel 30, a reaction that fixes the ammonia to the heat storage material of the second heat exchange reaction vessel 30 starts, and the reaction that fixes ammonia to the heat storage material of the second heat exchange reaction vessel 30 is accelerated. Then at step 108, after a predetermined time period has elapsed since the transition to step 106, the valve V6 attached to the flow pipe 46, the valve V7 attached to the flow pipe 16, and the valve V9 attached to the flow pipe 17 are closed, stopping heating of the pressure control reaction vessel 50. The acceleration mode thereby ends, and processing transitions to step 110 in order to switch to heat dissipation mode.

Then at step 110, the valves V1, V2 attached to the flow pipes 12, 45 are opened, and heating of the first heat exchange reaction vessel 20 is started. Then at step 112, the valve V3 attached to the ammonia pipe 42 is opened, and ammonia is transported from the first heat exchange reaction vessel 20 to the second heat exchange reaction vessel 30. When this occurs, the ammonia is fixed to the heat storage material of the second heat exchange reaction vessel 30, and the adsorption heat generated is dissipated through the heat carrier M2.

At the next step 114, determination is made as to whether or not a state exists in which the elapsed time (on a timer) since the transition to step 110 has not amounted to a specific time period Q¹. When determined that the time period Q¹ has not yet elapsed, steps 110 to 112 are continued, since the heat storage material of the first heat exchange reaction vessel 20 is in a state capable of desorbing ammonia. However, when determined that the time period Q¹ has elapsed, processing transitions to step 116 to switch to the heat storage mode.

At step 116, the valves V1, V2 attached to the flow pipes 12, 45 are closed, stopping heating of the first heat exchange reaction vessel 20.

Then at step 118, the valve V6 attached to the flow pipe 46 is opened, and the valve V3 attached to the ammonia pipe 42 is closed. When this occurs, ammonia is transported from the heat storage material of the second heat exchange reaction vessel 30 to the pressure control reaction vessel 50, starting a reaction in which ammonia desorbs from the heat storage material of the second heat exchange reaction vessel 30. The reaction in which ammonia desorbs from the heat storage material of the second heat exchange reaction vessel 30 is also accelerated. Then at step 120 the valve V6 attached to the flow pipe 46 is closed when a predetermined time period has elapsed since transitioning to step 118, ending the acceleration mode.

Then at step 122, the valve V5 attached to the flow pipe 14 and the valve V8 attached to the flow pipe 37B are opened, starting heating of the second heat exchange reaction vessel 30. Then at step 124, the valve V3 attached to the ammonia pipe 42 is opened, and ammonia is transported from the second heat exchange reaction vessel 30 to the first heat exchange reaction vessel 20. When this occurs, ammonia is desorbed from the heat storage material of the second heat exchange reaction vessel 30, and heat of the heat carrier M2 is stored.

At the next step 126, determination is made as to whether or not a state exists in which the elapsed time (on a timer) since the transition to step 120 has not amounted to a specific time period Q². When determined that the time period Q² has not yet elapsed, steps 122, 124 are continued to further desorb ammonia adsorbed to the heat storage material of the second heat exchange reaction vessel 30 and regenerate the heat storage material. However, when determined that the time period Q² has elapsed, processing transitions to the next step 128, the valves V3, V4 attached to the ammonia pipe 42 are closed, the valve V5 attached to the flow pipe 14 and the valve V8 attached to the flow pipe 37B are closed, and the present routine is ended. This thereby enables the pressure difference between the first heat exchange reaction vessel 20 and the second heat exchange reaction vessel 30 to be maintained.

As explained above, according to the chemical heat storage system of the first embodiment, the ammonia pressure of the second heat exchange reaction vessel is controlled by the pressure control reaction vessel when the second heat exchange reaction vessel is desorbing ammonia and when the second heat exchange reaction vessel is fixing ammonia. This thereby enables the reaction rate of ammonia desorption or fixation in the second heat exchange reaction vessel to be accelerated using a small input of energy.

Moreover, in cases in which macro-scale heat transfer/diffusion of material is being controlled when taking up/releasing ammonia on the heat storage material (metal chloride) of the second heat exchange reaction vessel, the difference between the equilibrium pressure and the ammonia gas pressure predominates the rate of uptake/release. This thereby enables the reaction rate of ammonia desorption or fixation to be accelerated by employing a large pressure difference. A phenomenon also sometimes occurs in which the reaction is slow initially at the start of ammonia uptake/release on the heat storage material (metal chloride) of the second heat exchange reaction vessel. A large pressure enables the reaction rate of ammonia desorption or fixation to be accelerated in that time period.

A small amount of ammonia gas in comparison to the overall uptake amount and release amount is sufficient to promote ammonia uptake/release on the heat storage material of the second heat exchange reaction vessel, enabling the pressure control reaction vessel to be designed smaller and with a lower heat capacity than the first heat exchange reaction vessel, thus enabling the thermal energy required for such temperature adjustment to be suppressed.

Designing the pressure control reaction vessel that imparts a large pressure difference to be smaller than the first heat exchange reaction vessel enables pressure control to be achieved with a small input of energy.

Although explanation has been given in the above embodiment of an example in which the pressure control reaction vessel is employed as the pressure control section, there is no limitation thereto. A pressurized gas cylinder may be employed as the pressure control section, similarly to in a second embodiment, described below. In such cases, similarly to in the second embodiment, the pressurized gas cylinder may be heated or cooled using a temperature adjustment section.

### Second Embodiment

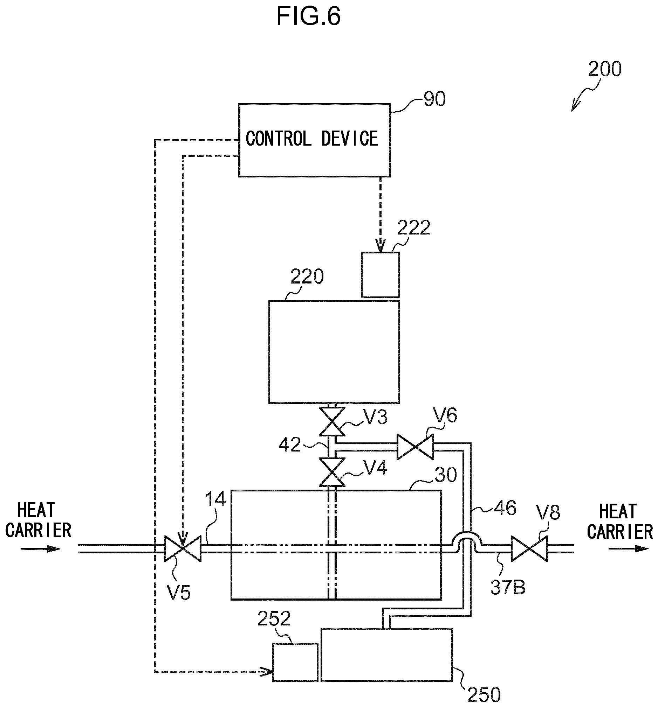

Explanation follows regarding a second embodiment of the chemical heat storage system of the invention, with reference to Fig. 6 to Fig. 9. The present embodiment is a system configuration in which reactions of the heat storage material of the second heat exchange reaction vessel are accelerated by transporting ammonia between a first pressurized gas cylinder and a second heat exchange reaction vessel of the present embodiment, and by pressure control using a second pressurized gas cylinder.

Parts of the second embodiment of the chemical heat storage system similar to configuration elements of the first embodiment are appended with the same reference numerals, and detailed explanation will be omitted thereof.

As illustrated in Fig. 6, a chemical heat storage system 200 of the present embodiment includes a first pressurized gas cylinder 220 capable of taking up and releasing ammonia, a second heat exchange reaction vessel 30, and a second pressurized gas cylinder 250 capable of taking up and releasing ammonia. The first pressurized gas cylinder 220 is an example of an ammonia buffer vessel of the invention. The second heat exchange reaction vessel 30 is an example of a reaction vessel of the invention. The second pressurized gas cylinder 250 is an example of a pressure control section of the invention.

A flow pipe 14 having a valve V5 and a flow pipe 37B having a valve V8 are in communication with the second heat exchange reaction vessel 30.

The first pressurized gas cylinder 220 is connected to the second heat exchange reaction vessel 30 through an ammonia pipe 42 having valves V3, V4. A point of the ammonia pipe 42 between the valves V3, V4 is connected to one end of the flow pipe 46 having the valve V6. The first pressurized gas cylinder 220 and the second heat exchange reaction vessel 30 are in communication with the second pressurized gas cylinder 250 through the ammonia pipe 42 and flow pipe 46.

A temperature adjustment section 222 is attached to the first pressurized gas cylinder 220. The temperature adjustment section 222 heats and cools the first pressurized gas cylinder 220. The temperature adjustment section 222 is, for example, configured by a heater and a Peltier device.

The second pressurized gas cylinder 250, similarly to the first pressurized gas cylinder 220, has a temperature adjustment section 252 attached. The temperature adjustment section 252 heats and cools the second pressurized gas cylinder 250.

The second pressurized gas cylinder 250 is configured with a smaller size and lower heat capacity than the first pressurized gas cylinder 220 so that the input energy required to control the ammonia pressure in the second heat exchange reaction vessel 30 is smaller than the input energy required to control raising the pressure or lowering the pressure of ammonia using the first pressurized gas cylinder 220.

Explanation next follows regarding an example of heat transport between the first pressurized gas cylinder 220 and the second heat exchange reaction vessel 30.

### Heat Dissipation Mode

First, as the initial state, a state is achieved in which ammonia is collected at the first pressurized gas cylinder 220 side and ammonia is taken up in the first pressurized gas cylinder 220, and the valve V3 is then closed.

Then the valves V3, V6 are opened, ammonia is taken up at the second pressurized gas cylinder 250 side, and then the valves V3, V6 are closed.

The second pressurized gas cylinder 250 is then heated using the temperature adjustment section 252. The valves V4, V6 are then opened.

In this state, the ammonia pressure on the second pressurized gas cylinder 250 side becomes higher than the ammonia pressure on the second heat exchange reaction vessel 30 side, and the ammonia pressure of the second heat exchange reaction vessel 30 rises. The adsorption reaction of the heat storage material in the second heat exchange reaction vessel 30 is accordingly accelerated. The adsorption reaction is accordingly accelerated in the time period when the adsorption reaction of the heat storage material of the second heat exchange reaction vessel 30 is slowed, namely for a predetermined time period from the point in time when the adsorption reaction of the heat storage material of the second heat exchange reaction vessel 30 starts.

The valve V6 is then closed, and the valve V3 is opened. When this is performed, the first heat exchange reaction vessel 20 is heated by the temperature adjustment section 222.

The heat carrier M2 flows through the second heat exchange reaction vessel 30 to dissipate heat toward an external heat utilization target.

In this state, the ammonia pressure on the first pressurized gas cylinder 220 side becomes higher than the ammonia pressure on the second heat exchange reaction vessel 30 side. The ammonia is transported from the first pressurized gas cylinder 220 having high ammonia pressure toward the second heat exchange reaction vessel 30 having relatively low ammonia pressure.

Ammonia reaching the second heat exchange reaction vessel 30 by the above ammonia transportation is fixed via an exothermic reaction to the heat storage material in the reaction chambers 34 of the second heat exchange reaction vessel 30. The heat carrier M2 is heated by the exothermic reaction, and the heated heat carrier M2 dissipates heat toward an external heating target.

Ammonia is accordingly supplied from the second pressurized gas cylinder 250 to the second heat exchange reaction vessel 30 in the predetermined time period from the point in time when the ammonia adsorption reaction with the heat storage material of the second heat exchange reaction vessel 30 starts, accelerating the adsorption reaction. Then heat is dissipated from the second heat exchange reaction vessel 30 along with the transport of ammonia from the first pressurized gas cylinder 220 to the second heat exchange reaction vessel 30.

### Heat Storage Mode

In cases in which the above dissipation of heat continues and the amount of ammonia in the first pressurized gas cylinder 220 decreases, the initial state is regenerated by the ammonia in the system collecting at the first pressurized gas cylinder 220 side again, and the ammonia being taken up in the first pressurized gas cylinder 220.

As a specific example of a regeneration method, first, from a closed state of the valve V3, the valves V4, V6 are opened, thereby allowing the heat carrier M2 maintained at high temperature (for example, 160°C) to flow in the heat carrier flow paths 36 of the second heat exchange reaction vessel 30. The second pressurized gas cylinder 250 is also cooled by the temperature adjustment section 252.

The ammonia accordingly desorbs from the second heat exchange reaction vessel 30 via an endothermic reaction, and ammonia supplied from the second heat exchange reaction vessel 30 is taken up in the second pressurized gas cylinder 250. The desorption reaction of the heat storage material of the second heat exchange reaction vessel 30 is accordingly accelerated due to the ammonia pressure of the second heat exchange reaction vessel 30 falling. In this manner, the desorption reaction is accelerated in the period when the desorption reaction of the heat storage material of the second heat exchange reaction vessel 30 is slow, namely for a predetermined time period from the point in time when the desorption reaction of the heat storage material of the second heat exchange reaction vessel 30 starts.

The valve V6 is then closed and the valve V3 opened. This thereby allows flow of the heat carrier M2 maintained at a high temperature (for example 160°C) in the heat carrier flow paths 36 of the second heat exchange reaction vessel 30. The first pressurized gas cylinder 220 is also cooled by the temperature adjustment section 222.

Ammonia is thereby desorbed from the second heat exchange reaction vessel 30 via an endothermic reaction, and ammonia is transported from the second heat exchange reaction vessel 30 side to the first pressurized gas cylinder 220 side.

The ammonia that has arrived at the first pressurized gas cylinder 220 is taken up by the first pressurized gas cylinder 220.

The second pressurized gas cylinder 250 accordingly takes up ammonia from the second heat exchange reaction vessel 30 for the predetermined time period from the point in time when the ammonia desorption reaction of the heat storage material of the second heat exchange reaction vessel 30 starts, and the desorption reaction is accelerated. After this, the second heat exchange reaction vessel 30 stores heat as the ammonia is transported from the second heat exchange reaction vessel 30 to the first pressurized gas cylinder 220.

In the chemical heat storage system 200, the heat dissipation mode and the heat storage mode can be performed repeatedly.

As explained in the example of the above embodiment, the chemical heat storage system 200 of the present embodiment is an apparatus that transports heat by transporting ammonia from one reaction vessel to another reaction vessel by utilizing a difference in ammonia pressure arising between a reaction vessel and the first pressurized gas cylinder.

The control device 90 is a control section that performs overall control of the chemical heat storage system 200, and is electrically connected to the valves V3 to V6, V8, to the temperature adjustment sections 222, 252, and to an external heat source or the like, so as to be able to control heat utilization by controlling the valves, pump, heat source, and heat exchange.

Other configuration of the chemical heat storage system 200 according to the second embodiment is similar to that of the first embodiment, and duplicate explanation will be omitted thereof.

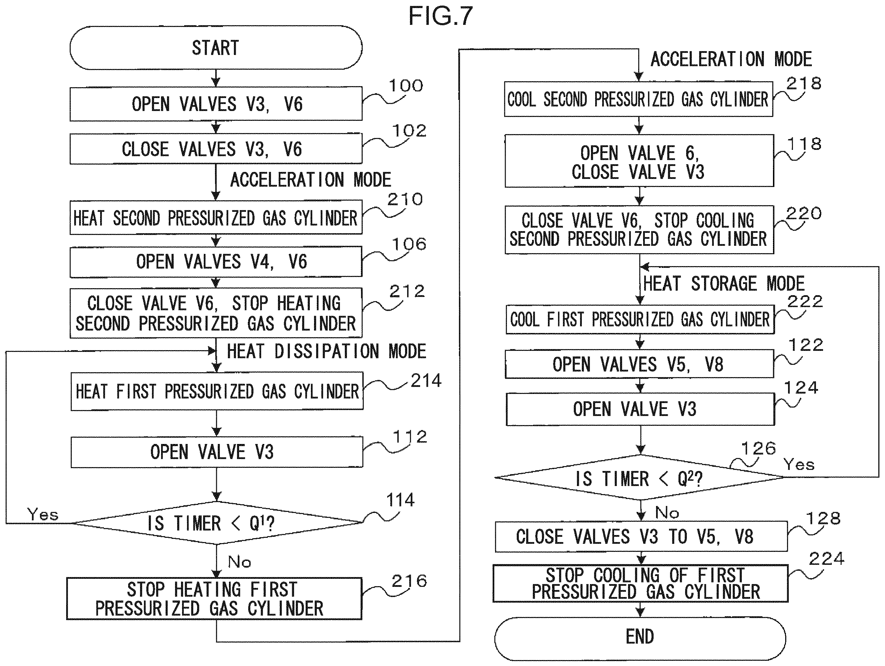

Explanation next follows with reference to Fig. 7, mainly focusing on a heat dissipation and heat storage cycle control routine, in control routines by the control device 90 that is a control section that controls the chemical heat storage system 200 of the present embodiment. In the heat dissipation and heat storage cycle control routine, heat is stored after ammonia has been supplied from the first pressurized gas cylinder 220, and heat has been dissipated from the second heat exchange reaction vessel 30. Processing similar to that of the first embodiment is appended with the same reference numerals, and detailed explanation will be omitted thereof.

When the power of the control device 90 is turned ON by switching ON the startup switch of the chemical heat storage system 200 of the present embodiment, the system starts up, and when heat dissipation from the second heat exchange reaction vessel 30 is requested, the heat dissipation and heat storage cycle control routine is executed and operation of a pump P starts.

On execution of the present routine, first, at step 100, the valve V3 attached to the ammonia pipe 42 and the valve V6 attached to the flow pipe 46 are opened. When this occurs, ammonia is transported from the first pressurized gas cylinder 220 to the second pressurized gas cylinder 250, and ammonia is taken up in the second pressurized gas cylinder 250. Then at step 102, the valves V3 attached to the ammonia pipe 42 and the valve V6 attached to the flow pipe 46 are closed.

Then at step 210, the heating of the second pressurized gas cylinder 250 by the temperature adjustment section 252 is started. At step 106, the valve V4 attached to the ammonia pipe 42 and the valve V6 attached to the flow pipe 46 are opened. When this occurs, ammonia is transported from the second pressurized gas cylinder 250 to the heat storage material of the second heat exchange reaction vessel 30, and a reaction that fixes the ammonia to heat storage material of the second heat exchange reaction vessel 30 starts. The reaction that fixes the ammonia to the heat storage material of the second heat exchange reaction vessel 30 is accelerated. Then at step 212, after a predetermined time period has elapsed since the transition to step 106, the valve V6 attached to the flow pipe 46 is closed. Heating of the second pressurized gas cylinder 250 by the temperature adjustment section 252 is also stopped, and the acceleration mode ended. Processing then transitions to step 214 in order to switch to heat dissipation mode.

Then at step 214, heating of the first pressurized gas cylinder 220 by the temperature adjustment section 222 is started. Then at step 112, the valve V3 attached to the ammonia pipe 42 is opened, and ammonia is transported from the first pressurized gas cylinder 220 to the second heat exchange reaction vessel 30. When this occurs, the ammonia is fixed to the heat storage material of the second heat exchange reaction vessel 30, and the adsorption heat generated is dissipated through the heat carrier M2.

In the next step 114, determination is made as to whether or not a state exists in which the elapsed time (on a timer) since the transition to step 110 has not amounted to a specific time period Q¹. When determined that the time period Q¹ has not yet elapsed, steps 214,112 are continued, since the first pressurized gas cylinder 220 is in a state capable of releasing ammonia. However, when determined that the time period Q¹ has elapsed, processing transitions to step 216 to switch to the heat storage mode.

At step 216, heating of the first pressurized gas cylinder 220 by the temperature adjustment section 222 is stopped.

Then at step 218, cooling of the second pressurized gas cylinder 250 by the temperature adjustment section 252 is started. Then at step 118, the valve V6 attached to the flow pipe 46 is opened, and the valve V3 attached to the ammonia pipe 42 is closed. When this occurs, ammonia is transported from the heat storage material of the second heat exchange reaction vessel 30 to the second pressurized gas cylinder 250, and a reaction that desorbs ammonia from the heat storage material of the second heat exchange reaction vessel 30 starts. The reaction that desorbs ammonia from the heat storage material of the second heat exchange reaction vessel 30 is also accelerated. Then at step 220, the valve V6 attached to the flow pipe 46 is closed when a predetermined time period has elapsed since transitioning to step 118. Cooling of the second pressurized gas cylinder 250 by the temperature adjustment section 252 is also stopped, and the acceleration mode is ended.

Then at step 222, cooling of the first pressurized gas cylinder 220 by the temperature adjustment section 222 is started. Then at step 122, the valve V5 attached to the flow pipe 14 and the valve V8 attached to the flow pipe 37B are opened, and heating of the second heat exchange reaction vessel 30 starts. Then at step 124, the valve V3 attached to the ammonia pipe 42 is opened, and ammonia is transported from the second heat exchange reaction vessel 30 to the first pressurized gas cylinder 220. When this occurs, ammonia is desorbed from the heat storage material of the second heat exchange reaction vessel 30, and heat of the heat carrier M2 is stored.

Then at the next step 126, determination is made as to whether or not a state exists in which the elapsed time (on a timer) since the transition to step 122 has not amounted to a specific time period Q². When determined that the time period Q² has not yet elapsed, steps 222, 122, 124 are continued to further desorb ammonia adsorbed to the heat storage material of the second heat exchange reaction vessel 30 and regenerate the heat storage material. However, when determined that the time period Q² has elapsed, processing transitions to the next step 128, the valves V3, V4 attached to the ammonia pipe 42 are closed, and the valve V5 attached to the flow pipe 14 and the valve V8 attached to the flow pipe 37B are closed. Then at step 224, cooling of the first pressurized gas cylinder 220 by the temperature adjustment section 222 is stopped, and the present routine is ended.

### Examples

Explanation follows regarding an example in which the adsorption reaction and desorption reaction were accelerated on the heat storage material of the second heat exchange reaction vessel 30 in the above chemical heat storage system 200 of the second embodiment.

In the present embodiment, the heat storage material of the second heat exchange reaction vessel 30 was a magnesium chloride complex, with the temperature thereof regulated at 130°C. The equilibrium pressure is 75 kPa under these conditions.

Prior to reaction start, the heat storage material in the second heat exchange reaction vessel 30 was in the form of Mg(NH₃)₂Cl₂, and the first pressurized gas cylinder 220 was capable of supplying an amount of ammonia sufficient to convert all the heat storage material of the second heat exchange reaction vessel 30 into Mg(NH₃)₆Cl₂ at a pressure of 110 kPa or higher. The second pressurized gas cylinder 250 held ammonia gas at 315 kPa, but did not hold an amount of ammonia sufficient to convert all of the heat storage material of the second heat exchange reaction vessel 30 into Mg(NH₃)₆Cl₂.

Prior to starting the reaction the valves V3, V6 were closed.

As an operation sequence, the valves V4, V6 between the second heat exchange reaction vessel 30 and the second pressurized gas cylinder 250 were opened for 3 seconds, and a pressure of 315 kPa applied to the magnesium chloride complex of the heat storage material of the second heat exchange reaction vessel 30, accelerating the adsorption reaction.

Then the valve V3 was opened at the same time as closing the valve V6, and ammonia gas was supplied from the first pressurized gas cylinder 220 to the second heat exchange reaction vessel 30 at from 110 kPa to 120 kPa.

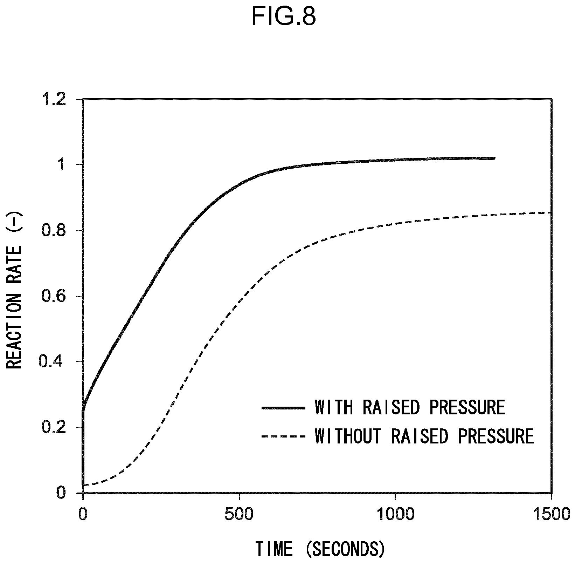

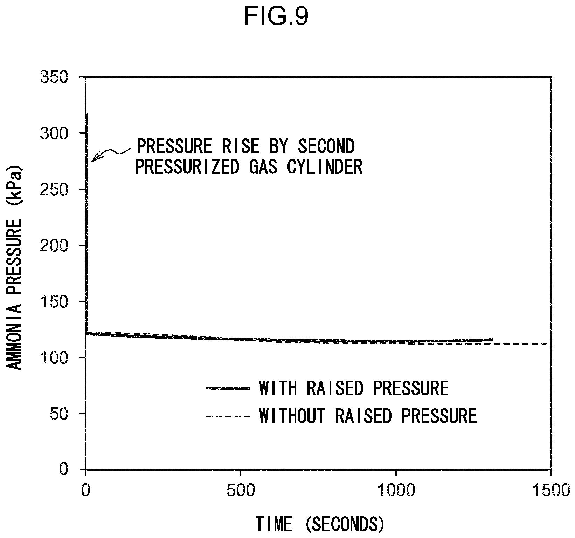

The resulting change in the reaction rate and pressure with time is illustrated in Fig. 8. The reaction rate in the initial period of adsorption reaction was slow when ammonia gas was adsorbed to the magnesium chloride complex at from 110 kPa to 120 kPa without employing a pressure control section. However, it is apparent that raising the pressure using the second pressurized gas cylinder 250, serving as a pressure control section (see Fig. 9), enabled the reaction to be accelerated in the initial period of the adsorption reaction, shortening the time required for adsorption.

As explained above, the chemical heat storage system of the second embodiment enables the ammonia pressure of the second heat exchange reaction vessel to be controlled by the second pressurized gas cylinder when the second heat exchange reaction vessel desorbs ammonia and fixes ammonia. This thereby enables the reaction rate of ammonia desorption and fixation in the second heat exchange reaction vessel to be accelerated with a small input of energy.

A small amount of ammonia gas relative the total uptake amount and release amount is sufficient to promote ammonia uptake/release by the heat storage material of the second heat exchange reaction vessel (metal chloride). The second pressurized gas cylinder can accordingly be designed smaller and with a lower heat capacity than the first pressurized gas cylinder, enabling the thermal energy required for temperature adjustment to be suppressed.

Moreover, designing the second pressurized gas cylinder that imparts a large pressure difference, to be smaller than the first pressurized gas cylinder enables pressure control to be performed with a small input of energy.

Although a case has been explained in the above embodiment in which the second pressurized gas cylinder is employed as the pressure control section, there is no limitation thereto. Similarly to in the first embodiment, a pressure control reaction vessel may be employed as the pressure control section. In such cases, similarly to in the first embodiment, the pressure control reaction vessel may be heated using high temperature water. Moreover, similarly to in the third embodiment, described below, a piston and drive section may be employed as the pressure control section.

### Third Embodiment

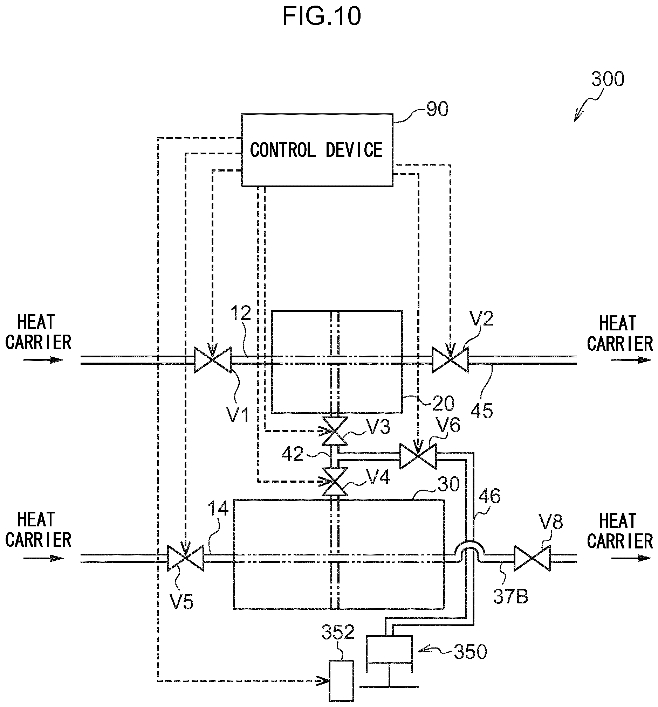

Explanation follows regarding a third embodiment of the chemical heat storage system of the invention, with reference to Fig. 10 to Fig. 11. The present embodiment is a system configured such that ammonia is transported between a first heat exchange reaction vessel and a second heat exchange reaction vessel, and the reactions of a heat storage material of the second heat exchange reaction vessel are accelerated by pressure control using the piston.

Note that in the third embodiment of the chemical heat storage system, portions similar to configuration elements of the first embodiment are appended with the same reference numerals, and detailed explanation will be omitted thereof.

As illustrated in Fig. 10, a chemical heat storage system 300 of the present embodiment includes a first heat exchange reaction vessel 20, a second heat exchange reaction vessel 30, and a piston 350 capable of taking up and releasing ammonia. The first heat exchange reaction vessel 20 is an example of the ammonia buffer vessel of the invention. The second heat exchange reaction vessel 30 is an example of a reaction vessel of the invention. The piston 350 is an example of a pressure control section of the invention.

The first heat exchange reaction vessel 20 and the second heat exchange reaction vessel 30 are in communication with the piston 350 through an ammonia pipe 42 and a flow pipe 46.

A drive section 352 for driving the piston 350 is attached to the piston 350, and the drive section 352 is driven so as to release and take up ammonia.

The piston 350 is configured smaller and with a lower heat capacity than the first heat exchange reaction vessel 20 so that the input energy required to control the ammonia pressure in the second heat exchange reaction vessel 30 is smaller than the input energy required to raise or lower the pressure of ammonia in the first heat exchange reaction vessel 20.

The piston 350 is configured with a piston volume of one or more times the pipe volume of the ammonia pipe 42.

Explanation next follows regarding an example in which heat transport is performed between the first heat exchange reaction vessel 20 and the second heat exchange reaction vessel 30.

### Heat Dissipation Mode

Explanation first follows regarding an example in which heat supplied to the first heat exchange reaction vessel 20 is transported to the second heat exchange reaction vessel 30, and the transported heat is utilized as heat externally dissipated from the second heat exchange reaction vessel 30. In this example the first heat exchange reaction vessel 20 is employed as the reaction vessel on the heat input side, and the second heat exchange reaction vessel 30 is employed as the reaction vessel on the heat output side.

In this example, as the initial state, first ammonia is collected at the first heat exchange reaction vessel 20 side, and a state achieved in which the ammonia is fixed to the heat storage material in the first heat exchange reaction vessel 20, and the valve V3 is then closed.

The valves V3, V6 are then opened, the piston 350 is driven, a state is achieved in which ammonia has been taken up by the piston 350, and then the valves V3, V6 closed.

The valves V4, V6 are then opened, and the piston 350 is driven such that ammonia is released from the piston 350.

In this state, the ammonia pressure on the piston 350 side is a higher than the ammonia pressure on the second heat exchange reaction vessel 30 side, and the ammonia pressure of the second heat exchange reaction vessel 30 rises. The adsorption reaction of the heat storage material of the second heat exchange reaction vessel 30 is accordingly accelerated. In this manner, the adsorption reaction is accelerated in the period when the adsorption reaction of the heat storage material of the second heat exchange reaction vessel 30 is slow, namely for a predetermined time period from the point in time when the adsorption reaction of the heat storage material of the second heat exchange reaction vessel 30 starts.

The valve V6 is then closed, and the valve V3 is opened. When this is performed, heat is supplied by opening the valve V1, and allowing the high temperature heat carrier M1 to flow into the first heat exchange reaction vessel 20.

The heat carrier M2 flows through the second heat exchange reaction vessel 30 to dissipate heat toward an external heat utilization target.

In this state, the ammonia pressure on the first heat exchange reaction vessel 20 side becomes higher than the ammonia pressure on the second heat exchange reaction vessel 30 side. The ammonia is transported from the first heat exchange reaction vessel 20 having high ammonia pressure toward the second heat exchange reaction vessel 30 having relatively low ammonia pressure. When this occurs, ammonia in the first heat exchange reaction vessel 20 is desorbed from the heat storage material in the first heat exchange reaction vessel 20 via an endothermic reaction. The endothermic reaction is maintained by maintaining the flow of the high temperature heat carrier M1 into the first heat exchange reaction vessel 20 (namely, by maintaining supply of heat to the first heat exchange reaction vessel 20).

The ammonia that has arrived at the second heat exchange reaction vessel 30 by the above ammonia transport is fixed via an exothermic reaction to the heat storage material within the reaction chambers 34 of the second heat exchange reaction vessel 30. The heat carrier M2 is heated by the exothermic reaction, and the heated heat carrier M2 dissipates heat toward an external heating target.

In this manner, ammonia is supplied from the piston 350 to the second heat exchange reaction vessel 30 for the predetermined time period from the point in time of the start of the ammonia adsorption reaction of the heat storage material of the second heat exchange reaction vessel 30, and the adsorption reaction is accelerated. Then accompanying transport of the ammonia from the first heat exchange reaction vessel 20 to the second heat exchange reaction vessel 30, the heat supplied to the first heat exchange reaction vessel 20 is transported to the second heat exchange reaction vessel 30 side, and heat is dissipated from the second heat exchange reaction vessel 30.

### Heat Storage Mode

When the above heat dissipation continues and the ammonia in the first heat exchange reaction vessel 20 has decreased, the initial state is regenerated by collecting the ammonia in the system once more at the first heat exchange reaction vessel 20 side and fixing the ammonia to the heat storage material molded bodies 21A and 21B in the first heat exchange reaction vessel 20.

As a specific example of regeneration, first, in a state in which the valve V3 is closed, the valves V4, V6 are opened, thereby allowing the heat carrier M2 maintained at high temperature (for example 160°C) to flow in the heat carrier flow paths 36 of the second heat exchange reaction vessel 30.

The ammonia accordingly desorbs from the second heat exchange reaction vessel 30 via an endothermic reaction, and the piston 350 is driven to take up ammonia supplied from the second heat exchange reaction vessel 30. The desorption reaction of the heat storage material of the second heat exchange reaction vessel 30 is thereby accelerated by the fall in the ammonia pressure in the second heat exchange reaction vessel 30. In this manner, the desorption reaction is accelerated for the time period when the desorption reaction of the heat storage material of the second heat exchange reaction vessel 30 is slow, namely for a predetermined time period from the point in time when the desorption reaction of the heat storage material of the second heat exchange reaction vessel 30 starts.

The valve V6 is then closed and the valve V3 opened. This thereby allows the heat carrier M2 maintained at a high temperature (for example 160°C) to flow in the heat carrier flow paths 36 of the second heat exchange reaction vessel 30.

The ammonia is thereby desorbed from the second heat exchange reaction vessel 30 via an endothermic reaction, transporting the ammonia from the second heat exchange reaction vessel 30 side to the first heat exchange reaction vessel 20 side.

The ammonia that has arrived at the first heat exchange reaction vessel 20 is fixed via an exothermic reaction to the heat storage material molded bodies 21A and 21B in the reaction chambers 24 of the first heat exchange reaction vessel 20.

The exothermic reaction is maintained by, for example, maintaining a supply of external air to the first heat exchange reaction vessel 20.

Ammonia from the second heat exchange reaction vessel 30 is thereby taken up in the piston 350 for the predetermined time period from the point in time when the ammonia desorption reaction of the heat storage material of the second heat exchange reaction vessel 30 starts, and the desorption reaction is accelerated. After this, the second heat exchange reaction vessel 30 stores heat as the ammonia is transported from the second heat exchange reaction vessel 30 to the first heat exchange reaction vessel 20.

In the chemical heat storage system 100, the heat dissipation mode and the heat storage mode can be performed repeatedly.

As explained in the above embodiment, the chemical heat storage system 300 is an apparatus that transports heat by transporting ammonia from one reaction vessel to another reaction vessel by utilizing a difference in ammonia pressure arising between the two reaction vessels.

A control device 90 is a control section that performs overall control of the chemical heat storage system 300, and is electrically connected to the valves V1 to V6, V8, to the drive section 352, and to an external heat source or the like, so as to be able to control heat utilization by controlling the valves, pump, heat source, and heat exchange.

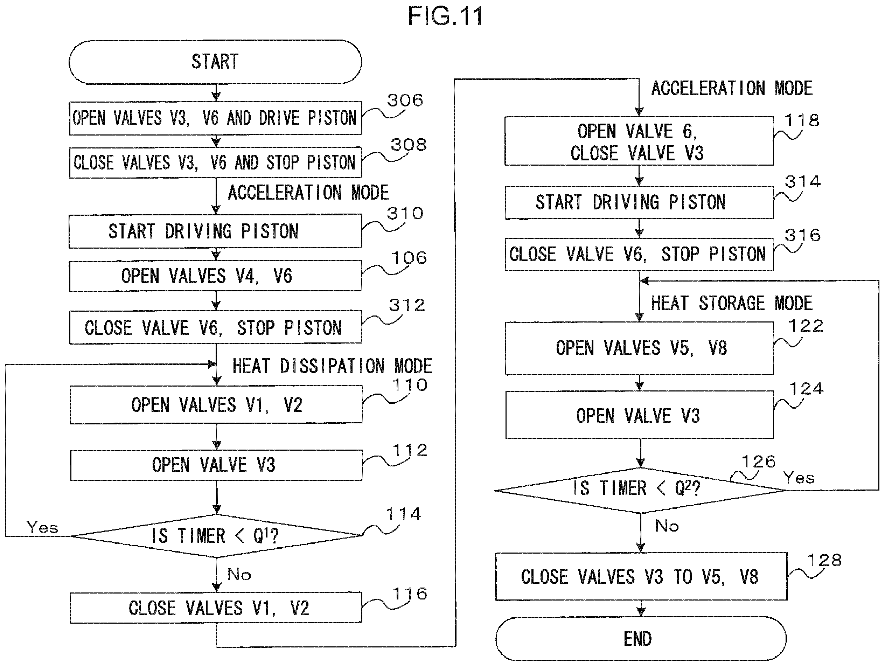

Explanation next follows with reference to Fig. 11, mainly focusing on a heat dissipation and heat storage cycle control routine, in control routines by the control device 90 that is a control section that controls the chemical heat storage system 300 of the present embodiment. In the heat dissipation and heat storage cycle control routine, heat is stored after high temperature water has been supplied to the first heat exchange reaction vessel 20 and heat has been dissipated from the second heat exchange reaction vessel 30. Processing similar to that of the first embodiment is appended with the same reference numerals, and detailed explanation will be omitted thereof.

When the power of the control device 90 is turned ON by switching ON the startup switch of the chemical heat storage system of the present embodiment, the system starts up, and when heat dissipation from the second heat exchange reaction vessel 30 is requested, the heat dissipation and heat storage cycle control routine is executed and operation of a pump P is starts.

On execution of the present routine, first, at step 306, the valve V3 attached to the ammonia pipe 42 and the valve V6 attached to the flow pipe 46 are opened. When this occurs, the piston 350 is driven, and ammonia from the heat storage material of the first heat exchange reaction vessel 20 is taken up in the 350. Then at step 308, the valve V3 attached to the ammonia pipe 42 and the valve V6 attached to the flow pipe 46 are closed, and driving of the piston 350 is stopped.

Then at step 310, driving of the piston 350 is started so that ammonia is released.

At step 106, the valve V4 attached to the ammonia pipe 42 and the valve V6 attached to the flow pipe 46 are opened. When this occurs, ammonia is transported from the piston 350 to the heat storage material of the second heat exchange reaction vessel 30, and a reaction that fixes the ammonia to the heat storage material of the second heat exchange reaction vessel 30 starts. The reaction that fixes the ammonia to the heat storage material of the second heat exchange reaction vessel 30 is also accelerated. Then at step 312, after a predetermined time period has elapsed since the transition to step 106, the valve V6 attached to the flow pipe 46 is closed, driving of the piston 350 is stopped, and the acceleration mode thereby ends. Processing then transitions to step 110 in order to switch to heat dissipation mode.

Then at step 110, the valves V1, V2 attached to the flow pipes 12, 45 are opened, and heating of the first heat exchange reaction vessel 20 is started. Then at step 112, the valve V3 attached to the ammonia pipe 42 is opened, and ammonia is transported from the first heat exchange reaction vessel 20 to the second heat exchange reaction vessel 30.

In the next step 114, determination is made as to whether or not a state exists in which the elapsed time (on a timer) since the transition to step 110 has not amounted to a specific time period Q¹. When determined that the time period Q¹ has not yet elapsed, steps 110 to 112 are continued, since the heat storage material of the first heat exchange reaction vessel 20 is in a state capable of desorbing ammonia. However, when determined that the time period Q¹ has elapsed, processing transitions to step 116 to switch to the heat storage mode.

At step 116, the valves V1, V2 attached to the flow pipes 12, 45 are closed, stopping heating of the first heat exchange reaction vessel 20.

Then at step 118, the valve V6 attached to the flow pipe 46 is opened, and the valve V3 attached to the ammonia pipe 42 is closed. Then at step 314, driving of the piston 350 is started so as to take up ammonia. When this occurs, ammonia from the heat storage material of the second heat exchange reaction vessel 30 is taken up in the piston 350, and a reaction that desorbs ammonia from the heat storage material of the second heat exchange reaction vessel 30 starts. The reaction that desorbs ammonia from the heat storage material of the second heat exchange reaction vessel 30 is also accelerated. Then at step 316, the valve V6 attached to the flow pipe 46 is closed when a predetermined time period has elapsed since transitioning to step 314. Driving of the piston 350 is also stopped, ending the acceleration mode.

Then at step 122, the valve V5 attached to the flow pipe 14 and the valve V8 attached to the flow pipe 37B are opened, starting heating of the second heat exchange reaction vessel 30. Then at step 124, the valve V3 attached to the ammonia pipe 42 is opened, and ammonia is transported from the second heat exchange reaction vessel 30 to the first heat exchange reaction vessel 20.

Then at the next step 126, determination is made as to whether or not a state exists in which the elapsed time (on a timer) since the transition to step 120 has not amounted to a specific time period Q². When determined that the time period Q² has not yet elapsed, steps 122, 124 are continued to further desorb ammonia adsorbed on the heat storage material of the second heat exchange reaction vessel 30 and regenerate the heat storage material. However, when determined that the time period Q² has elapsed, processing transitions to the next step 128, and the valves V3, V4 attached to the ammonia pipe 42 are closed. The valve V5 attached to the flow pipe 14 and the valve V8 attached to the flow pipe 37B are also closed, and the present routine is ended.

As explained above, in the chemical heat storage system of the third embodiment, the ammonia pressure of the second heat exchange reaction vessel is controlled by the piston when the second heat exchange reaction vessel is desorbing ammonia and when the second heat exchange reaction vessel is fixing ammonia. This thereby enables the reaction rate of ammonia desorption or fixation in the second heat exchange reaction vessel to be promoted using a small input of energy.

Moreover, employing the piston as the pressure control section enables the ammonia pressure to be raised or lowered by utilizing energy other than thermal energy (electrical energy, mechanical energy).

Moreover, a small amount of ammonia gas in comparison to the overall uptake amount and release amount is sufficient to promote ammonia uptake/release on the heat storage material (metal chloride) of the second heat exchange reaction vessel. This enables the piston to be designed smaller than the first heat exchange reaction vessel, enabling the energy required to be suppressed.

Designing the piston that imparts a large pressure difference to be smaller than the first heat exchange reaction vessel enables pressure control to be achieved using a small input of energy.

Although explanation has been given above of chemical heat storage systems according to embodiments of the invention, the invention is not limited to the above embodiments.

For example, a pressure adjustment mechanism may be further provided to the ammonia pipe. Examples of such a pressure adjustment mechanism include a means with a function to make the ammonia pressure difference between the first heat exchange reaction vessel 20 and the second heat exchange reaction vessel 30 even larger using external force. More specific examples of a pressure adjustment mechanism include use of known means, such as a squeeze pump or a compressor. Providing an auxiliary pressure adjustment mechanism in addition to the valves in this manner enables more effective transport of ammonia (namely transport of heat) due to operation of the pressure adjustment mechanism.

Explanation has been given of examples of the heat transport apparatus according to the invention applied to a chemical heat storage system. However there is no limitation thereto, and applications may be made other than application of the heat transport apparatus to a chemical heat storage system.

The entire disclosure of Japanese Patent Application No. 2014-060602 is incorporated by reference in the present specification.

All publications, patent applications and technical standards mentioned in the present specification are incorporated by reference in the present specification to the same extent as if the individual publication, patent application, or technical standard was specifically and individually indicated to be incorporated by reference patent application, or technical standard was specifically and individually indicated to be incorporated by reference.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A heat transport apparatus (100) comprising:
a reaction vessel (30) housing heat storage material including a chemical adsorbent that stores heat when ammonia is desorbed, and that dissipates heat when ammonia is fixed via a coordination reaction;
an ammonia buffer vessel (20) capable of taking up and releasing ammonia; and
an ammonia pipe (42) that is connected to the reaction vessel (30) and to the ammonia buffer vessel (20), and that allows ammonia to flow between the reaction vessel (30) and the ammonia buffer vessel (20);
wherein a difference in ammonia pressure arising between the reaction vessel (30) and the ammonia buffer vessel (20) is utilized to transport heat by transporting ammonia from one vessel to the other vessel, and **characterized by**
a pressure control section (50) that controls ammonia pressure in the reaction vessel (30) at least at one time out of when the reaction vessel (30) is desorbing ammonia, or when the reaction vessel (30) is fixing ammonia,
wherein the pressure control section (50) controls so as to lower the ammonia pressure of the reaction vessel (30) when the reaction vessel (30) is desorbing ammonia, and
wherein the pressure control section (50) controls so as to raise the ammonia pressure of the reaction vessel (30) when the reaction vessel (30) is fixing ammonia via a coordination reaction.

2. The heat transport apparatus (100) of claim 1, wherein the ammonia buffer vessel (20) is a reaction vessel housing a heat storage material that stores heat when ammonia is desorbed and that dissipates heat when ammonia is fixed, or a pressurized gas cylinder (220, 250) capable of taking up and releasing ammonia.

3. The heat transport apparatus (100) of claim 1 or 2, wherein the pressure control section (50) is configured so that input energy required to control the ammonia pressure of the reaction vessel (30) is smaller than the input energy required to raise the pressure or lower the pressure of the ammonia buffer vessel (20).

4. The heat transport apparatus (100) of any one of claim 1 to claim 3, wherein the pressure control section (50) is a reaction vessel housing a heat storage material including a physical adsorbent, or a chemical adsorbent, that stores heat when ammonia is desorbed and that dissipates heat when ammonia is fixed.

5. The heat transport apparatus (100) of any one of claim 1 to claim 3, wherein the pressure control section (50) is a pressurized gas cylinder (220, 250) capable of taking up and releasing ammonia.

6. The heat transport apparatus (100) of claim 4 or claim 5, further comprising a temperature adjustment section (222, 252) that performs temperature adjustment of the pressure control section (50).

7. The heat transport apparatus (100) of any one of claim 1 to claim 3, wherein the pressure control section (50) is a piston capable of taking up and releasing ammonia.

8. The heat transport apparatus (100) of claim 7, wherein the piston has a piston volume of one or more times a pipe volume of the ammonia pipe (42).

9. The heat transport apparatus (100) of any one of claim 1 to claim 8, wherein the chemical adsorbent is a metal halide compound.

## Patentansprüche

1. Wärmetransportvorrichtung (100), umfassend:
einen Reaktionsbehälter (30), in dem ein Wärmespeichermaterial aufgenommen ist, das ein chemisches Adsorptionsmittel umfasst, das Wärme speichert, wenn Ammoniak desorbiert wird, und das Wärme verteilt, wenn Ammoniak mittels einer Koordinationsreaktion fixiert wird;
einen Ammoniakpufferbehälter (20), der Ammoniak aufnehmen und freisetzen kann; und
eine Ammoniakleitung (42), die mit dem Reaktionsbehälter (30) und dem Ammoniakpufferbehälter (20) verbunden ist und ein Strömen von Ammoniak zwischen dem Reaktionsbehälter (30) und dem Ammoniakpufferbehälter (20) ermöglicht;
wobei eine Differenz zwischen dem Ammoniakdruck, der zwischen dem Reaktionsbehälter (30) und dem Ammoniakpufferbehälter (20) auftritt, zum Transportieren von Wärme durch Transportieren von Ammoniak von einem Behälter zu dem anderen Behälter genutzt wird, und **gekennzeichnet durch**
einen Drucksteuerabschnitt (50), der den Ammoniakdruck in dem Reaktionsbehälter (30) mindestens einmal, wenn der Reaktionsbehälter (30) Ammoniak desorbiert, oder wenn der Reaktionsbehälter (30) Ammoniak fixiert, steuert,
wobei der Drucksteuerabschnitt (50) eine Steuerung so durchführt, dass der Ammoniakdruck des Reaktionsbehälters (30) vermindert wird, wenn der Reaktionsbehälter (30) Ammoniak desorbiert, und
wobei der Drucksteuerabschnitt (50) eine Steuerung so durchführt, dass der Ammoniakdruck des Reaktionsbehälters (30) erhöht wird, wenn der Reaktionsbehälter (30) Ammoniak mittels der Koordinationsreaktion fixiert.

2. Wärmetransportvorrichtung (100) nach Anspruch 1, wobei der Ammoniakpufferbehälter (20) ein Reaktionsbehälter, in dem ein Wärmespeichermaterial aufgenommen ist, das Wärme speichert, wenn Ammoniak desorbiert wird, und das Wärme abgibt, wenn Ammoniak fixiert wird, oder ein Druckgaszylinder (220, 250) ist, der Ammoniak aufnehmen und freisetzen kann.

3. Wärmetransportvorrichtung (100) nach Anspruch 1 oder 2, wobei der Drucksteuerabschnitt (50) so ausgebildet ist, dass die eingebrachte Energie, die zum Steuern des Ammoniakdrucks des Reaktionsbehälters (30) erforderlich ist, kleiner ist als die eingebrachte Energie, die zum Erhöhen des Drucks oder zum Vermindern des Drucks des Ammoniakpufferbehälters (20) erforderlich ist.

4. Wärmetransportvorrichtung (100) nach einem von Anspruch 1 bis Anspruch 3, wobei der Drucksteuerabschnitt (50) ein Reaktionsbehälter ist, in dem ein Wärmespeichermaterial aufgenommen ist, das ein physikalisches Adsorptionsmittel oder ein chemisches Adsorptionsmittel umfasst, das Wärme speichert, wenn Ammoniak desorbiert wird, und das Wärme abgibt, wenn Ammoniak fixiert wird.

5. Wärmetransportvorrichtung (100) nach einem von Anspruch 1 bis Anspruch 3, wobei der Drucksteuerabschnitt (50) ein Druckgaszylinder (220, 250) ist, der Ammoniak aufnehmen und freisetzen kann.

6. Wärmetransportvorrichtung (100) nach Anspruch 4 oder Anspruch 5, die ferner einen Temperatureinstellabschnitt (222, 252) umfasst, der eine Temperatureinstellung des Drucksteuerabschnitts (50) durchführt.

7. Wärmetransportvorrichtung (100) nach einem von Anspruch 1 bis Anspruch 3, wobei der Drucksteuerabschnitt (50) ein Kolben ist, der Ammoniak aufnehmen und freisetzen kann.

8. Wärmetransportvorrichtung (100) nach Anspruch 7, wobei der Kolben ein Kolbenvolumen des Einfachen oder Mehrfachen eines Leitungsvolumens der Ammoniakleitung (42) aufweist.

9. Wärmetransportvorrichtung (100) nach einem von Anspruch 1 bis Anspruch 8, wobei das chemische Adsorptionsmittel eine Metallhalogenidverbindung ist.

## Revendications

1. Appareil de transport de chaleur (100) comprenant ;
un récipient de réaction (30) logeant un matériau de stockage de chaleur comportant un adsorbant chimique qui stocke de la chaleur lorsque de l'ammoniac est désorbé, et qui dissipe de la chaleur lorsque de l'ammoniac est fixé via une réaction de coordination ;
un récipient tampon d'ammoniac (20) capable d'absorber et de libérer de l'ammoniac ; et
un conduit d'ammoniac (42) qui est relié au récipient de réaction (30) et au récipient tampon d'ammoniac (20), et qui permet à de l'ammoniac de s'écouler entre le récipient de réaction (30) et le récipient tampon d'ammoniac (20) ;
dans lequel une différence dans la pression d'ammoniac se produisant entre le récipient de réaction (30) et le récipient tampon d'ammoniac (20) est utilisée pour transporter de la chaleur en transportant de l'ammoniac d'un récipient à l'autre récipient, et **caractérisé par**
une section de contrôle de pression (50) qui contrôle la pression d'ammoniac dans le récipient de réaction (30) au moins à un moment où le récipient de réaction (30) désorbe de l'ammoniac ou bien où le récipient de réaction (30) fixe de l'ammoniac,
dans lequel la section de contrôle de pression (50) assure le contrôle de sorte à abaisser la pression d'ammoniac du récipient de réaction (30) lorsque le récipient de réaction (30) désorbe de l'ammoniac, et
dans lequel la section de contrôle de pression (50) assure le contrôle de sorte à augmenter la pression d'ammoniac du récipient de réaction (30) lorsque le récipient de réaction (30) fixe de l'ammoniac via une réaction de coordination.

2. Appareil de transport de chaleur (100) selon la revendication 1, dans lequel le récipient tampon d'ammoniac (20) est un récipient de réaction logeant un matériau de stockage de chaleur qui stocke de la chaleur lorsque de l'ammoniac est désorbé et qui dissipe de la chaleur lorsque de l'ammoniac est fixé, ou une bouteille de gaz sous pression (220, 250) capable d'absorber et de libérer de l'ammoniac.

3. Appareil de transport de chaleur (100) selon la revendication 1 ou 2, dans lequel la section de contrôle de pression (50) est configurée afin que l'énergie d'entrée requise pour contrôler la pression d'ammoniac du récipient de réaction (30) est inférieure à l'énergie d'entrée requise pour augmenter la pression ou abaisser la pression du récipient tampon d'ammoniac (20).

4. Appareil de transport de chaleur (100) selon l'une quelconque de la revendication 1 à la revendication 3, dans lequel la section de contrôle de pression (50) est un récipient de réaction logeant un matériau de stockage de chaleur comportant un adsorbant physique, ou un adsorbant chimique, qui stocke de la chaleur lorsque de l'ammoniac est désorbé et qui dissipe de la chaleur lorsque de l'ammoniac est fixé.

5. Appareil de transport de chaleur (100) selon l'une quelconque de la revendication 1 à la revendication 3, dans lequel la section de contrôle de pression (50) est une bouteille de gaz sous pression (220, 250) capable d'absorber et de libérer de l'ammoniac.

6. Appareil de transport de chaleur (100) selon la revendication 4 ou la revendication 5, comprenant en outre une section de réglage de température (222, 252) qui effectue un réglage de température de la section de contrôle de pression (50).

7. Appareil de transport de chaleur (100) selon l'une quelconque de la revendication 1 à la revendication 3, dans lequel la section de contrôle de pression (50) est un piston capable d'absorber et de libérer de l'ammoniac,

8. Appareil de transport de chaleur (100) selon la revendication 7, dans lequel le piston a un volume de piston d'une ou plusieurs fois un volume de conduit du conduit d'ammoniac (42).

9. Appareil de transport de chaleur (100) selon l'une quelconque de la revendication 1 à la revendication 8, dans lequel l'adsorbant chimique est un composé d'halogénure métallique.
